# EUROPÄISCHE PATENTSCHRIFT

(11) **EP 3 853 830 B1**
(45) Veröffentlichungstag und Bekanntmachung des Hinweises auf die Patenterteilung: **20.03.2024**
(21) Anmeldenummer: 19758699.3
(22) Anmeldetag: 22.08.2019
(51) Int. Cl.: G08G 1/00, B60W 30/18, B60W 60/00, B60W 50/00

(54) **VERFAHREN ZUM KOORDINIEREN EINES FAHRZEUGVERBUNDES, AUSWERTEEINHEIT, FAHRZEUG SOWIE FAHRZEUGVERBUND**
METHOD FOR COORDINATING A VEHICLE GROUP, EVALUATION UNIT, VEHICLE AND VEHICLE GROUP
PROCÉDÉ DE COORDINATION D'UN PELOTON DE VÉHICULES, UNITÉ D'ÉVALUATION, VÉHICULE ET PELOTON DE VÉHICULES

(30) Priorität: 18.09.2018 DE 102018122824
(43) Veröffentlichungstag der Anmeldung: 28.07.2021
(73) Patentinhaber: ZF CV Systems Europe BV, 1170 Brussels (BE)
(72) Erfinder: BAUM, Mathias, 30455 Hannover (DE)
(74) Vertreter: Rabe, Dirk-Heinrich
(86) Internationale Anmeldenummer: PCT/EP2019/072419
(87) Internationale Veröffentlichungsnummer: WO 2020/057886

(56) Entgegenhaltungen:
- DE-A1-102009 015 170
- DE-A1-102017 000 646
- JP-A- 2016 146 131

## Beschreibung

Die Erfindung betrifft ein Verfahren zum Koordinieren eines Fahrzeugverbundes aus mehreren Fahrzeugen, insbesondere Nutzfahrzeugen, eine Auswerteeinheit zur Durchführung des Verfahrens sowie ein Fahrzeug, insbesondere Leitfahrzeug, sowie einen Fahrzeugverbund mit einem derartigen Fahrzeug bzw. Leitfahrzeug.

Es ist bekannt, dass sich mehrere Fahrzeuge aufeinander abgestimmt auf einer Fahrbahn in kurzen Verbund-Folgeabständen hintereinander bewegen können, um durch einen verringerten Luftwiderstand Kraftstoff zu sparen. Derartig abgestimmte Fahrzeuge werden auch als Fahrzeugverbund, Fahrzeugkonvoi oder Platoon bezeichnet. Bei einer solchen abgestimmten Fahrt kann der heute übliche Sicherheitsabstand zwischen den einzelnen Fahrzeugen unterschritten werden, wenn sich die Fahrzeuge untereinander beispielsweise über eine drahtlose V2X-Kommunikation koordinieren. Koordiniert werden die einzelnen Fahrzeuge des Fahrzeugverbundes dabei beispielsweise von einem Leitfahrzeug, das über die drahtlose V2X-Kommunikation mit den anderen Fahrzeugen kommunizieren und Daten, insbesondere fahrdynamische Eigenschaften der jeweiligen Fahrzeuge, austauschen kann. Ferner können auch Informationen über die Umgebung inklusive der umgebenden Verkehrsteilnehmer ausgetauscht werden. Das Leitfahrzeug kann dabei insbesondere einen Soll-Abstand vorgeben, der von den einzelnen Fahrzeugen des Fahrzeugverbundes dann über ein Abstandsregelsystem eingestellt wird. Dadurch kann gewährleistet werden, dass die einzelnen Fahrzeuge des Fahrzeugverbundes schneller aufeinander reagieren können, wodurch eine Beeinträchtigung der Sicherheit vermieden und somit das Unterschreiten des Sicherheitsabstandes gerechtfertigt werden kann, da die Reaktionszeiten verkürzt werden.

Ist ein derartiger Fahrzeugverbund auf beispielsweise einer mehrspurigen Straße, z.B. einem Highway/Autobahn unterwegs, stellt der Fahrzeugverbund durch die aufeinander abgestimmte Einstellung der Fahrdynamik zum Einhalten des vorgegebenen Soll-Abstandes ein sehr langes Hindernis für die Fahrzeuge dar, die die Fahrbahn des Fahrzeugverbundes passieren wollen. Dieses Hindernis, das eine Ausdehnung in Fahrtrichtung des Fahrzeugverbundes von mehreren Fahrzeugen aufweist, kann von einem Fahrzeug, das sich beispielsweise auf der benachbarten Fahrbahn befindet, nur schwer in Querrichtung überwunden werden. Dies kann beispielsweise dann nötig sein, wenn das auf der benachbarten Fahrbahn befindliche Fahrzeug von der Autobahn auf eine Ausfahrt abfahren möchte und dazu ein Spurwechsel über die vom Fahrzeugverbund besetzte Fahrbahn durchführen muss. Das jeweilige Fahrzeug muss somit entweder stark abbremsen, um hinter dem letzten Fahrzeug des Fahrzeugverbundes die Spur wechseln zu können, oder so stark beschleunigen, dass es vor dem ersten Fahrzeug des Fahrzeugverbundes einen Spurwechsel zur Ausfahrt durchführen kann. Ein derartiges Abbremsen oder Beschleunigen des Fahrzeuges um ans Ende bzw. an den Anfang des Fahrzeugverbundes zu gelangen, ist jedoch nicht in jeder Verkehrssituation möglich und birgt zudem gewisse Gefahren für den nachfolgenden Verkehr sowie für das jeweilige Fahrzeug selbst.

Derselbe Nachteil ergibt sich für ein Fahrzeug, das sich auf einer Auffahrt der Autobahn befindet und das zu dem Zeitpunkt auf die Fahrspur des Fahrzeugverbundes wechselt, zu dem sich auch der Fahrzeugverbund an dieser Stelle befindet. Auch das auffahrende Fahrzeug hat nur dann eine Chance, auf die Autobahn aufzufahren, wenn es derartig beschleunigt, dass es vor dem ersten Fahrzeug des Fahrzeugverbundes auf die Fahrbahn des Fahrzeugverbundes gelangt oder aber derartig abbremst, dass es nach dem letzten Fahrzeug des Fahrzeugverbundes auf diese Fahrbahn gelangt. Dies kann unter Umständen dazu führen, dass das auffahrende Fahrzeug in den Stillstand abbremst, was nachteiligerweise zur Folge hat, dass es zum Auffahren auf die Autobahn aus dem Stand beschleunigen muss. Beide Möglichkeiten des Auffahrens auf die Autobahn sind somit für das auffahrende Fahrzeug und auch den umliegenden Verkehr sicherheitsbedenklich.

Um diesem Umstand Rechnung zu tragen, kann vorgesehen sein, dass der Fahrzeugverbund gesteuert bzw. koordiniert von dem Leitfahrzeug des Fahrzeugverbundes, beispielsweise dem ersten Fahrzeug des Fahrzeugverbundes, an Auffahrten bzw. Ausfahrten der Autobahn automatisch aufgelöst wird, so dass die üblichen Sicherheitsabstände zwischen den Fahrzeugen wieder eingestellt werden. Jedes Fahrzeug bewegt sich dann unkoordiniert gesteuert von seinem jeweiligen Fahrer. Dieser kann dann anhand seiner Beobachtungen sein Fahrzeug entsprechend abbremsen, um dem auffahrenden bzw. abfahrenden Fahrzeug einen Spurwechsel zu ermöglichen. Weiterhin kann vorgesehen sein, dass der Fahrer eines beliebigen Fahrzeuges im Fahrzeugverbund manuell eine Bremsung veranlasst, wenn er ein auffahrendes bzw. abfahrendes Fahrzeug erkennt. Dadurch kann der Fahrzeugverbund an einer beliebigen Stelle manuell geöffnet werden, um dem auffahrenden bzw. abfahrenden Fahrzeug einen Spurwechsel zu ermöglichen.

Nachteilig bei diesen genannten Methoden ist, dass der Fahrzeugverbund zumindest zeitweise nicht koordiniert wird und dadurch die Vorteile eines Fahrzeugverbundes bzw. Platoons nicht mehr gewährleistet werden können. Zudem muss der Fahrzeugverbund nach einer derartigen Verkehrssituation, die ein Auflösen des Fahrzeugverbundes bewirkt, wieder entsprechend aufgebaut und dazu aufeinander abgestimmt werden, was einen erhöhten Regelungsaufwand zur Folge hat.

Eine weitere Lösung sieht vor, dass die Anzahl der Fahrzeuge in einem Fahrzeugverbund begrenzt wird, beispielsweise auf drei Fahrzeuge. Die Länge des Hindernisses wird somit begrenzt, so dass ein Auffahren bzw. Abfahren bei einer vorausschauenden Fahrweise ohne weiteres möglich ist.

Weiterhin kann vorgesehen sein, dass der Fahrzeugverbund bei Erkennen einer Auffahrt oder einer Ausfahrt zeitweise in diesem Bereich in mehrere Teil-Fahrzeugverbünde (Sub-Platoons) aufgeteilt wird, unabhängig davon, ob ein Fahrzeug auffahren oder abfahren möchte. Dabei bewegt sich innerhalb jedes Teil-Fahrzeugverbundes eine bestimmte Anzahl an Fahrzeugen, zwischen denen als Soll-Abstand der Verbund-Folgeabstand vorgegeben wird. Zwischen den einzelnen Teil-Fahrzeugverbünden wird als Soll-Abstand ein Eintritts-Abstand vorgegeben, der es auffahrenden und abfahrenden Fahrzeugen im Bereich der Auffahrt bzw. der Ausfahrt ermöglicht, auf die Fahrspur des Fahrzeugverbundes zu wechseln. Nach dem Passieren der Auffahrt bzw. der Ausfahrt werden die Teil-Fahrzeugverbünde automatisch wieder zusammengeführt. Nachteilig hierbei ist, dass einzelne Fahrzeuge des Fahrzeugverbundes in dem Bereich von Auffahrten und Ausfahrten auch dann ihre Fahrdynamik verändern, wenn kein Fahrzeug auffahren bzw. abfahren möchte. Anschließend sind die Teil-Fahrzeugverbünde wieder zusammenzuführen. Insgesamt wird somit unter Umständen eine unnötige Regelung der Soll-Abstände durchgeführt, wodurch sich unnötige Brems- und Antriebsvorgänge für einen Teil der Fahrzeuge ergeben.

Das automatisierte Einstellen eines Soll-Abstandes nach Erkennen eines Fahrzeuges in der Fahrspur des Fahrzeugverbundes ist beispielsweise aus DE 11 2014 004 023 T5 bekannt. Demnach findet dennoch eine koordinierte Fahrt statt, wenn bereits ein unbekanntes Fahrzeug zwischen den Fahrzeugen des Fahrzeugverbundes auf dessen Fahrspur eingeschert ist. Der Fahrzeugverbund wird demnach aufgrund des unbekannten Fahrzeuges nachträglich in zwei Teil-Fahrzeugverbünde aufgeteilt, wobei sich diese weiterhin in abgestimmter Art und Weise zueinander bewegen. Zwischen den beiden Teil-Fahrzeugverbünden kann nach dem Eintritt des unbekannten Fahrzeuges ein Eintritts-Abstand eingestellt werden, der größer ist als der herkömmliche Soll-Abstand bzw. Verbund-Folgeabstand zwischen den einzelnen Fahrzeugen. Dadurch wird weiterhin ein koordinierter Fahrbetrieb sichergestellt und gleichzeitig gewährleistet, dass das unbekannte Fahrzeug die Fahrzeuge des Fahrzeugverbundes bzw. der Teil-Fahrzeugverbünde nicht beeinträchtigt. Nachteilig hierbei ist, dass erst dann mit einer Abstandserhöhung reagiert wird, wenn das unbekannte Fahrzeug bereits eingeschert ist. Eine Unterteilung in mehrere Teil-Fahrzeugverbünde und demnach eine Reaktion auf das eingescherte Fahrzeug erfolgt demnach erst nach dem Zeitpunkt des Einscherens.

Gemäß US 9,396,661 B2 ist vorgesehen, dass sich ein Fahrzeugverbund in mehrere Fahrzeug-Verbünde aufteilen kann, wenn über ein Anforderungssignal von einem sich in der Umgebung bewegenden Fahrzeug angefordert wird, dass dieses Fahrzeug dem Fahrzeugverbund beitreten möchte. In koordinierter Art und Weise wird dann zwischen zwei festgelegten Fahrzeugen des Fahrzeugverbundes ein Eintritts-Abstand eingestellt, der es dem einscherbereiten Fahrzeug ermöglicht, in den Fahrzeugverbund einzutreten. Demnach wird der Fahrzeugverbund auch hier in zwei Teil-Fahrzeugverbünde aufgeteilt, wobei dies auf eine aktive Anforderung des jeweiligen Fahrzeuges über eine drahtlose V2X-Kommunikation erfolgt. Verfügt ein einscherbereites Fahrzeug über keine derartige Möglichkeit der Kommunikation, kann es nur vor oder nach dem Fahrzeugverbund auf die Fahrbahn des Fahrzeugverbundes wechseln, wodurch die Auffahrt oder die Abfahrt auf eine Autobahn erschwert ist. Eine vergleichbare Vorgehensweise ist in US 9,799,224 B2 beschrieben.

In US 2016/0019782 A1 ist weiterhin beschrieben, dass im Umfeld um den Fahrzeugverbund befindlichen Fahrzeugen Warnhinweise oder Warninformationen dargelegt werden können, die der Fahrer des jeweiligen Fahrzeuges beispielsweise aufgrund der Ausdehnung des Fahrzeugverbundes bzw. der einzelnen Fahrzeuge selbst nicht wahrnehmen kann.

Aus der JP-A-2016 146 131 ist es bekannt ein Fahrzeug-Platoon vor Auffahrten und Ausfahrten zeitweilig in Teil-Fahrzeugverbände aufzuspalten. Dadurch entstehen größere Lücken in dem Fahrzeugverband in die auffahrende bzw. abfahrende Fahrzeuge einfahren können, um das Auffahren bzw. Abfahren von Fahrzeugen zu unterstützen. Nach Passierung der Auffahrt bzw. Ausfahrt wird die Aufspaltung des Platoons wieder beendet und die entstandenen Lücken werden wieder geschlossen. Aus der DE 10 2009 015 170 A1 ist ein Verfahren und eine Vorrichtung zur Regelung der Fahrgeschwindigkeit eines Fahrzeugs, insbesondere Nutzfahrzeugs bekannt. Die Fahrgeschwindigkeit wird in Abhängigkeit einer Fahrgeschwindigkeit von in Fahrtrichtung hinter dem Eigenfahrzeug und/oder seitlich zu dem Fahrzeug detektierten Fremdfahrzeugen geregelt. Dies geschieht so, dass überholende und/oder von einer Fahrspur in eine eigene Fahrspur einfahrende Fremdfahrzeuge zeitgerecht einscheren können.

Aufgabe der Erfindung ist, ein Verfahren zum Koordinieren von Fahrzeugen eines Fahrzeugverbundes anzugeben, mit dem ein sicherer Fahrbetrieb, der den Fahrzeugverbund umgebenden Fahrzeuge, gewährleistet werden kann. Aufgabe der Erfindung ist weiterhin, eine Auswerteeinheit, ein Fahrzeug sowie ein Fahrzeugverbund anzugeben.

Diese Aufgabe wird durch ein Verfahren nach Anspruch 1 und eine Auswerteeinheit nach Anspruch 17 gelöst. Die Unteransprüche geben bevorzugte Weiterbildungen an.

Erfindungsgemäß ist demnach vorgesehen, dass zum Koordinieren eines Fahrzeugverbundes aus einer Anzahl an Fahrzeugen, wobei sich die Fahrzeuge des Fahrzeugverbundes in vorgegebenen Soll-Abständen zueinander auf einer Fahrbahn bewegen und die Fahrzeuge über eine V2X-Kommunikation untereinander drahtlos kommunizieren, wobei der vorgegebene Soll-Abstand vom jeweiligen Fahrzeug über ein Abstandsregelsystem eingestellt wird, die Soll-Abstände zwischen diesen Fahrzeugen derartig festgelegt werden, dass der Fahrzeugverbund dauerhaft in eine festgelegte Anzahl von mindestens zwei Teil-Fahrzeugverbünden unterteilt ist, so dass einem Führungs-Teil-Fahrzeugverbund mindestens ein Folge-Teil-Fahrzeugverbund folgt.

Um dies zu erreichen, wird zumindest jedem Folge-Teil-Fahrzeugverbund ein eigenes Führungsfahrzeug zugeordnet, wobei das Führungsfahrzeug des jeweiligen Folge-Teil-Fahrzeugverbundes den jeweiligen Folge-Teil-Fahrzeugverbund als erstes Fahrzeug anführt. Weiterhin wird dem Führungsfahrzeug des jeweiligen Folge-Teil-Fahrzeugverbundes ein Soll-Abstand vorgegeben, wobei dieser Soll-Abstand mindestens einem vorab festgelegten Eintrittsabstand entspricht. Somit wird vorteilhaferweise bereits vorab ein Eintritts-Abstand festgelegt, der in jedem Fall zwischen den Teil-Fahrzeugverbünden einzuhalten ist. Demnach wird proaktiv gehandelt und nicht erst dann, wenn ein Fahrzeug bereits in den Fahrzeugverbund eingetreten ist, so dass einem einscherbereiten Fahrzeug von vornherein eine sichere Möglichkeit zum Überqueren der Fahrbahn des Fahrzeugverbundes gegeben werden kann.

Der Eintrittsabstand ist erfindungsgemäß derartig festgelegt, dass sich nach Einstellen des Eintrittsabstandes als Soll-Abstand zu einem direkt vorausfahrenden Fahrzeug desselben Fahrzeugverbundes ein Zwischenraum zwischen den jeweiligen Teil-Fahrzeugverbünden ausbildet, so dass ein einscherbereites Fahrzeug mit einer Fahrzeuglänge, die eine vorab festgelegte Maximallänge nicht überschreitet, zwischen den mindestens zwei Teil-Fahrzeugverbünden auf die Fahrbahn des Fahrzeugverbundes in den Zwischenraum wechseln kann.

Somit wird von vornherein ein Zwischenraum festgelegt, in den eine bestimmte Art von Fahrzeugen, nämlich solche die die Maximallänge nicht überschreiten, einscheren können, ohne dass die Fahrzeuge des Fahrzeugverbundes dafür mit einer Anpassung der Fahrdynamik zu reagieren haben. Zudem wird dieser Zwischenraum im Unterschied zum Stand der Technik bereits dann eingestellt, bevor ein Fahrzeug einschert und nicht erst in Reaktion darauf, so dass auch bereits der Einschervorgang sicherer gestaltet werden kann. Dadurch dass dieser Zwischenraum dauerhaft eingestellt ist, ist eine Änderung der Fahrdynamik der Fahrzeuge z.B. an den Auffahrten und Ausfahrten eines Highways/Autobahn für Fahrzeuge, die die Maximallänge nicht überschreiten, nicht mehr nötig. Dadurch kann ein effizienterer Fahrbetrieb gewährleistet und der Regelungsaufwand minimiert werden. Zusätzlich besteht durch den nicht allzu großen Soll-Abstand zwischen den Teil-Fahrzeugverbünden eine verbesserte Möglichkeit zur drahtlosen Kommunikation derselben untereinander, als wenn die Teil-Fahrzeugverbünde fahrdynamisch unabhängig voneinander, und damit unter Umständen in sehr großen Soll-Abständen zueinander fahren würden.

Gemäß einer bevorzugten Ausführung ist vorgesehen, dass der Eintrittsabstand in Abhängigkeit der Maximallänge sowie eines Mindest-Abstandes vor und nach dem einscherbereiten Fahrzeug festgelegt wird, wobei die Maximallänge zwischen 5m und 10m, vorzugsweise 6m, beträgt und der Mindest-Abstand zwischen 10m und 25m jeweils vor und nach dem einscherbereiten Fahrzeug liegt, so dass der Eintrittsabstand auf zwischen 25m und 60m, vorzugsweise auf 35 Meter, festgelegt wird.

Somit wird der Zwischenraum lediglich in Abhängigkeit von geometrischen Größen eines potentiell einscherbereiten Fahrzeuges festgelegt, um diesem die Möglichkeit des Passierens bzw. Überquerens der Fahrbahn des Fahrzeugverbundes zu geben, d.h. dann, wenn der Fahrzeugverbund aufgrund seiner Länge ein Hindernis darstellt, z.B. bei Auffahrten oder Ausfahrten. Weiterhin wird durch das Ansetzen einer Maximallänge von 6m ein Großteil der Fahrzeuge, insbesondere PKW, erfasst, für die der Fahrzeugverbund ein Hindernis darstellen kann und die mit dem Fahrzeugverbund herkömmlicherweise nicht kommunizieren und sich demnach auch nicht über eine drahtlose V2X-Kommunikation bemerkbar machen können. Dadurch wird bereits ein Großteil der Fahrsituationen abgedeckt, in denen ein Teilen des Fahrzeugverbundes nötig ist, um ein sicheres Überqueren der Fahrbahn des Fahrzeugverbundes durch diesen hindurch zu ermöglichen. Der Eintrittsabstand sollte jedoch geringer als der übliche Sicherheitsabstand sein, so dass der Fahrzeugverbund auch als geteilter Fahrzeugverbund und nicht als zwei unabhängige Fahrzeugverbünde von außen wahrgenommen wird und Fahrzeuge nicht dauerhaft zwischen die Teil-Fahrzeugverbünde einscheren.

Durch das Ansetzen des Mindestabstandes wird auf der anderen Seite eine Art reduzierter Sicherheitsabstand berücksichtigt. Dieser stellt sicher, dass der Fahrer des einscherbereiten Fahrzeuges erkennt, dass ihm eine Möglichkeit gegeben wird, durch das Hindernis mit hoher Sicherheit hindurchzufahren. Bei zu geringem Eintritts-Abstand kann es sonst dazu kommen, dass der Fahrer eines einscherbereiten Fahrzeuges ängstlich reagiert, da er das Eintreten in einen sehr langen Fahrzeugverbund aus z.B. Nutzfahrzeugen für ein hohes Risiko hält. Zudem kann durch den Mindestabstand das Risiko für Auffahrunfälle vermieden werden, während sich das Fahrzeug zwischen den Teil-Fahrzeugverbünden befindet. Anders als die Fahrzeuge des Fahrzeugverbundes, stimmt sich das eingescherte Fahrzeug nämlich nicht mit den übrigen Fahrzeugen ab. Allerdings verbleibt das eingescherte Fahrzeug normalerweise nicht sehr lange in dem Zwischenraum. Falls doch kann vorgesehen sein, dass der Eintritts-Abstand entsprechend angepasst wird und/oder dem eingescherten Fahrzeug ein Hinweis gegeben wird, dass es die Fahrbahn des Fahrzeugverbundes verlassen soll.

Erfindungsgemäß ist vorgesehen, dass der Soll-Abstand, der dem Führungsfahrzeug des jeweiligen Folge-Teil-Fahrzeugverbundes vorgegeben wird, unter der Bedingung festgelegt wird, dass Fahrzeuge unterschiedlicher Teil-Fahrzeugverbünde nach Einstellen dieses Soll-Abstandes weiterhin über die V2X-Kommunikation drahtlos miteinander mittelbar oder unmittelbar kommunizieren können zum Abstimmen des gesamten Fahrzeugverbundes. Dadurch wird vorteilhafterweise erreicht, dass der gesamte Fahrzeugverbund trotz des ausgebildeten Zwischenraums immer auch koordiniert betrieben werden kann, um auf die aktuelle Fahrsituation zu reagieren. So kann dem zweiten Teil-Fahrzeugverbund (erster Folge-Teil-Fahrzeugverbund) oder auch weiteren Folge-Teil-Fahrzeugverbünden auch immer noch eine Anweisung gegeben werden, wie sie auf eine bestimmte Fahrsituation zu reagieren haben. Gleichzeitig wird aber auch ein sicheres Einscheren in die Fahrspur des Fahrzeugverbundes ermöglicht.

Gemäß einer bevorzugten Ausführungsform ist weiterhin vorgesehen, dass allen anderen Fahrzeugen des Fahrzeugverbundes, die keine Führungsfahrzeuge eines Folge-Teil-Fahrzeugverbundes oder das erste Fahrzeug des Fahrzeugverbundes sind, ein Soll-Abstand zu einem diesem direkt vorausfahrenden Fahrzeug desselben Teil-Fahrzeugverbundes vorgegeben wird, der einem Verbund-Folgeabstand entspricht, wobei der Verbund-Folgeabstand kleiner ist als der Eintrittsabstand. Demnach wird der Rest des Fahrzeugverbundes auf übliche Art und Weise mit Soll-Abständen betrieben, die unterhalb der üblichen Sicherheitsabstände liegen, so dass eine Ausnutzung des Windschattens bei geringen Reaktionszeiten aufgrund der V2X-Kommunikation zwischen den Fahrzeugen ermöglicht wird. Für diese Verbund-Folgeabstände ist ein Einscheren von Fahrzeugen nicht vorgesehen. Demnach ist gemäß einer weiteren Ausführung vorgesehen, dass der Verbund-Folgeabstand - vorzugsweise ausschließlich - in Abhängigkeit von fahrdynamischen Eigenschaften der Fahrzeuge des Fahrzeugverbundes festgelegt und eingestellt wird, wobei der Verbund-Folgeabstand weniger als 25m, insbesondere weniger als 15m, beträgt. Geometrische oder fahrdynamische Eigenschaften von Fahrzeugen, die sich nicht im Fahrzeugverbund bewegen, sind demnach für die Festlegung des Verbund-Folgeabstandes nicht relevant.

Dabei ist vorzugsweise vorgesehen, dass die fahrdynamischen Eigenschaften der Fahrzeuge des Fahrzeugverbundes über die V2X-Kommunikation übertragen werden, so dass die Verbund-Folgeabstände im Fahrzeugverbund in einfacher Weise aufeinander abgestimmt festgelegt werden können.

Gemäß einer bevorzugten Weiterbildung ist vorgesehen, dass im Rahmen der Unterteilung des Fahrzeugverbundes in mindestens zwei Teil-Fahrzeugverbünde durch Vorgabe und Einstellung des Eintrittsabstandes als Soll-Abstand im Führungsfahrzeug des jeweiligen Folge-Teil-Fahrzeugverbundes nicht mit einem einscherbereiten Fahrzeug über die V2X-Kommunikation kommuniziert wird. Demnach findet das Unterteilen und das Ausbilden des Zwischenraumes ohne ein aktives Anfordern des Fahrzeuges an den Fahrzeugverbund statt. Der Fahrzeugverbund kann somit lediglich anhand der Informationen reagieren, die von den Fahrzeugen des Fahrzeugverbundes selbst festgelegt wurden oder die vom Fahrzeugverbund selbst beobachtet bzw. erkannt werden.

Vorzugsweise ist weiterhin vorgesehen, dass bei der Festlegung der Anzahl an Teil-Fahrzeugverbünden berücksichtigt wird, dass jeder Teil-Fahrzeugverbund aus einer Maximalanzahl an Fahrzeugen besteht, wobei die Maximalanzahl zwischen drei und acht, besonders bevorzugt bei fünf, liegt.. Dadurch wird vorteilhafterweise erreicht, dass ein Teil-Fahrzeugverbund nicht zu lang wird und demnach auch der Teil-Fahrzeugverbund selbst kein "Teil-Hindernis" darstellt, auf den ein einscherbereites Fahrzeug nur sehr schwer, d.h. durch starkes beschleunigen oder abbremsen, reagieren kann.

Gemäß einer bevorzugten Weiterbildung ist vorgesehen, dass der Soll-Abstand, der dem Führungsfahrzeug des jeweiligen Folge-Teil-Fahrzeugverbundes vorgegeben wird und der mindestens dem Eintrittsabstand entspricht, zusätzlich in Abhängigkeit davon festgelegt wird, ob der durch den Eintritts-Abstand ausgebildete Zwischenraum zwischen den jeweiligen Fahrzeug-Verbünden ein Einscheren eines als einscherbereit erkannten Fahrzeuges der Fahrzeuglänge erlaubt, wobei bei einem Feststellen, dass ein Einscheren nicht möglich ist, der Soll-Abstand ausgehend vom Eintrittsabstand erhöht wird.

Demnach kann beispielsweise im Rahmen einer Prüfung eines Eintrittskriteriums festgestellt werden, ob der vorab festgelegte Eintritts-Abstand nicht ausreichend ist, um einem Fahrzeug das Einscheren zu ermöglichen. Bei einer Festlegung einer bestimmten Maximallänge kann es für bestimmte Fahrzeuge, z.B. Nutzfahrzeuge mit Anhänger, etc. nämlich dazu kommen, dass der Eintrittsabstand zu gering für ein sicheres Einscheren ist. Würde die Maximallänge auch auf derartige Fahrzeuge vorab festgelegt werden, kann ein Ausnutzen des Windschattens nicht mehr gewährleistet werden. Ebenso kann von außen unter Umständen nicht erkannt werden, dass der Fahrzeugverbund geteilt ist. Vielmehr wird bei einem großen Eintritts-Abstand, der auch langen Nutzfahrzeugen mit Anhängern das Einscheren ermöglicht, angenommen, dass es sich um zwei unabhängige Fahrzeugverbünde handelt. Fahrzeuge in der Umgebung werden dann auch dauerhaft in den dadurch ausgebildeten Zwischenraum einscheren, wodurch der koordinierte Fahrbetrieb gestört wird.

Somit kann für diese Ausnahme, dass auch längere Fahrzeuge einscheren wollen, der Soll-Abstand ausgehend vom Eintrittsabstand vergrößert werden. Demnach wird abgewogen, dass es in bestimmten, weniger häufig auftretenden Fahrsituationen unter Sicherheitsaspekten sinnvoller ist, den effizienten Fahrbetrieb zumindest kurzzeitig aufzuheben.

Um dies zu erreichen, kann zur Festlegung des Soll-Abstandes vorzugsweise geprüft werden, ob die Fahrzeuglänge des als einscherbereit erkannten Fahrzeuges die vorgegebene Maximallänge überschreitet, wobei der Soll-Abstand bei einem Überschreiten der Maximallänge ausgehend vom Eintrittsabstand um einen Abstandsbetrag erhöht wird. Die Erhöhung erfolgt dabei beispielsweise inkrementell, bis die Differenz zwischen der Fahrzeuglänge und der Maximallänge ausgeglichen ist. Alternativ kann der Abstandsbetrag auf einmalig in Abhängigkeit der erkannten Fahrzeuglänge festgelegt und der Soll-Abstand ausgehend vom Eintrittsabstand entsprechend angepasst werden. Dadurch kann gezielt Platz für ein längeres einscherbereites Fahrzeug gemacht und der Zwischenraum somit nicht unnötig vergrößert werden. Auch dabei kann der Soll-Abstand derartig festgelegt werden, dass die V2X-Kommunikation zwischen den Teil-Fahrzeugverbünden weiterhin aufrechterhalten werden kann.

Gemäß einer bevorzugten Ausführungsform kann weiterhin vorgesehen sein, dass das Erkennen, ob ein Fahrzeug einscherbereit ist, und die Ermittlung der Fahrzeuglänge des als einscherbereit erkannten Fahrzeuges in Abhängigkeit von Umgebungsdaten erfolgt, wobei die Umgebungsdaten von mindestens einem Umgebungserfassungssystem ausgegeben werden, wobei das jeweilige Umgebungserfassungssystem eine Umgebung um den Fahrzeugverbund überwacht. Somit erfolgt das Anpassen bzw. das Erhöhen des Soll-Abstandes ausschließlich anhand von Umgebungsdaten, die die Umgebung um den Fahrzeugverbund beschreiben, und nicht anhand von Anforderungssignalen von anderen Fahrzeugen, die einscheren wollen. Der Fahrzeugverbund erkennt somit selbst, ob das einscherende Fahrzeug mehr Platz benötigt. Dazu kann beispielsweise vorgesehen sein, dass in einer Auswerteinheit aus den Umgebungsdaten Trajektorien der bewegten Fahrzeuge ermittelt werden, die die Bewegung des jeweiligen Fahrzeuges prädizieren. Folgt daraus, dass das jeweilige Fahrzeug beabsichtigt, in den Zwischenraum einzutreten, kann entsprechend über die Fahrzeuglänge geprüft werden, ob das Fahrzeug in den Zwischenraum passt. Wenn nicht, kann der Soll-Abstand ausgehend vom Eintrittsabstand entsprechend erhöht werden. Weiterhin können auch Eintrittshinweise aus den Umgebungsdaten extrahiert werden, beispielsweise das Aktivieren eines Blinkers oder einer Lichthupe, die ebenfalls ein Hinweis sein können, ob das Fahrzeug beabsichtigt, in den Zwischenraum einzutreten und somit in die Fahrspur des Fahrzeugverbundes zwischen den Fahrzeugen des Fahrzeugverbundes einzutreten.

Gemäß einer bevorzugten Weiterbildung ist dabei vorgesehen, dass die Umgebungsdaten über die V2X-Kommunikation zwischen den Fahrzeugen des Fahrzeugverbundes und/oder zwischen den Fahrzeugen und einer Infrastruktureinrichtung abseits des Fahrzeugverbbundes, die ein externes Umgebungserfassungssystem aufweist, übertragen werden. Demnach kann mit internen Umgebungserfassungssystemen, die ohnehin in den Fahrzeugen vorhanden sind, und/oder unter Rückgriff auf Umgebungserfassungssysteme in der Umgebung, die beispielsweise eine Auffahrt bzw. eine Ausfahrt überwachen, erkannt werden, ob eine Anpassung des Soll-Abstandes nötig ist. Diese Daten können in einfacher Weise über die V2X-Kommunikation bereitgestellt werden, wobei die Verarbeitung dieser Daten dann vorzugsweise in einer Auswerteinheit in einem der Fahrzeuge des Fahrzeugverbundes stattfinden kann, die dann den Soll-Abstand für das Führungsfahrzeug des jeweiligen Teil-Fahrzeugverbundes festlegt.

Um die Prüfung sicherer zu gestalten, kann vorzugsweise vorgesehen sein, dass die Umgebungsdaten unterschiedlicher Umgebungserfassungssysteme fusioniert werden. Dadurch können verbesserte Tiefeninformationen extrahiert werden oder aber der Erfassungsbereich vergrößert werden, da ein Umgebungserfassungssystem in einem der hinteren Fahrzeuge oder abseits des Fahrzeugverbundes in einer Infrastruktureinrichtung unter Umständen mehr oder andere Bereiche der Umgebung sieht als das Umgebungserfassungssystem in den vorderen Fahrzeugen des Fahrzeugverbundes. Ferner kann dadurch erreicht werden, dass die Fahrzeuge weniger Sensoren benötigen, um das Umfeld ausreichend (insbesondere seitlich) zu erfassen, da die hinteren Fahrzeuge mit klassischerweise nach vorne gerichteten Sensoren auch seitliche Bereiche des Vordermanns abdecken können.

Gemäß einer weiteren Ausführungsform ist vorgesehen, dass lediglich dann geprüft wird, ob der durch den Eintritts-Abstand ausgebildete Zwischenraum zwischen den jeweiligen Teil-Fahrzeugverbünden ein Einscheren eines als einscherbereit erkannten Fahrzeuges der Fahrzeuglänge erlaubt, wenn sich der Fahrzeugverbund einer Auffahrt und/oder einer Ausfahrt nähert, so dass ein Erhöhen des Soll-Abstandes ausgehend vom Eintrittsabstand lediglich dann erfolgen kann, wenn sich der Fahrzeugverbund einer Auffahrt und/oder einer Ausfahrt nähert. Dadurch kann vorteilhafterweise vermieden werden, dass der Soll-Abstand aufgrund von überholenden Fahrzeugen ständig angepasst wird. Eine Anpassung soll demnach lediglich dann erfolgen, wenn der Fahrzeugverbund mit hoher Wahrscheinlichkeit ein Hindernis darstellt.

Gemäß einer bevorzugten Weiterbildung ist vorgesehen, dass nach einem Erfassen, dass das einscherbereite Fahrzeug sich aus dem Zwischenraum wieder entfernt hat, dem Führungsfahrzeug des jeweiligen Folge-Teil-Fahrzeugverbundes als Soll-Abstand der Eintrittsabstand vorgegeben wird. Demnach werden die Teil-Fahrzeugverbünde anschließend wieder zusammengeführt, um vorteilhafterweise keinen Platz für unnötig einscherende Fahrzeug zu bieten und den Windschatten wieder besser ausnutzen zu können. Zusätzlich verbessert sich die V2X-Kommunikation zwischen den Teil-Fahrzeugverbünden bei geringerem Soll-Abstand, vor allem im Vergleich zu Fahrzeugverbünden, die unabhängig voneinander fahren und damit deutlich höhere Abstände zueinander haben können.

Gemäß einer bevorzugten Weiterbildung ist außerdem vorgesehen, dass der Soll-Abstand, der dem Führungsfahrzeug des jeweiligen Folge-Teil-Fahrzeugverbundes vorgegeben wird und der mindestens dem Eintrittsabstand entspricht, zusätzlich in Abhängigkeit davon festgelegt wird, ob zwei oder mehrere einscherbereite Fahrzeuge erkannt werden. Vorteilhafterweise kann somit auch mehr als einem Fahrzeug Platz zum Überqueren gegeben werden, falls dies als effizient und sinnvoll erachtet wird, beispielsweise dann, wenn zwei Fahrzeuge unmittelbar hintereinander auffahren wollen und der Fahrzeugverbund dadurch nicht zu weit zu öffnen ist.

Gemäß einer weiteren Ausführungsform ist vorgesehen, dass das einscherbereite Fahrzeug ein auffahrendes Fahrzeug ist, das beabsichtigt, von einer Auffahrt auf die Fahrbahn des Fahrzeugverbundes zu wechseln, oder ein abfahrbereites Fahrzeug ist, das beabsichtigt, von einer benachbarten Fahrbahn über die Fahrbahn des Fahrzeugverbundes auf eine Ausfahrt zu wechseln. Es sind aber grundsätzlich auch andere Einschervorgänge möglich.

Erfindungsgemäß ist weiterhin eine Auswerteeinheit 2. nach Anspruch 17 vorgesehen.

Erfindungsgemäß ist auch ein Fahrzeug, das insbesondere als Leitfahrzeug in einem Fahrzeugverbund fungiert, vorgesehen, das eine derartige Auswerteeinheit aufweist. Weiterhin ist ein Fahrzeugverbund aus mehreren Fahrzeugen vorgesehen, wobei zumindest eines der Fahrzeuge als Leitfahrzeug eine derartige Auswerteeinheit aufweist und das Leitfahrzeug mit den Fahrzeugen des Fahrzeugverbundes über eine V2X-Kommunikation drahtlos kommunizieren kann, wobei die Fahrzeuge jeweils ein Abstandsregelsystem aufweisen, wobei das Abstandsregelsystem jeweils ausgebildet ist, den vom Leitfahrzeug über die Auswerteinheit vorgegebenen und über die V2X-Kommunikation übertragenen Soll-Abstand zum jeweils vorausfahrenden Fahrzeug des Fahrzeugverbundes einzustellen zum dauerhaften Unterteilen des Fahrzeugverbundes in mindestens zwei Teilfahrzeug-Verbünde.

Die Erfindung wird im Folgenden anhand von Zeichnungen näher erläutert. Es zeigen:
Fig. 1 einen Fahrzeugverbund aus mehreren Fahrzeugen auf einer mehrspurigen Straße in einer Auffahrsituation;
Fig. 2 einen Fahrzeugverbund aus mehreren Fahrzeuge auf einer mehrspurigen Straße in einer Abfahrsituation;
Fig. 3 ein Flussdiagramm des erfindungsgemäßen Verfahrens.

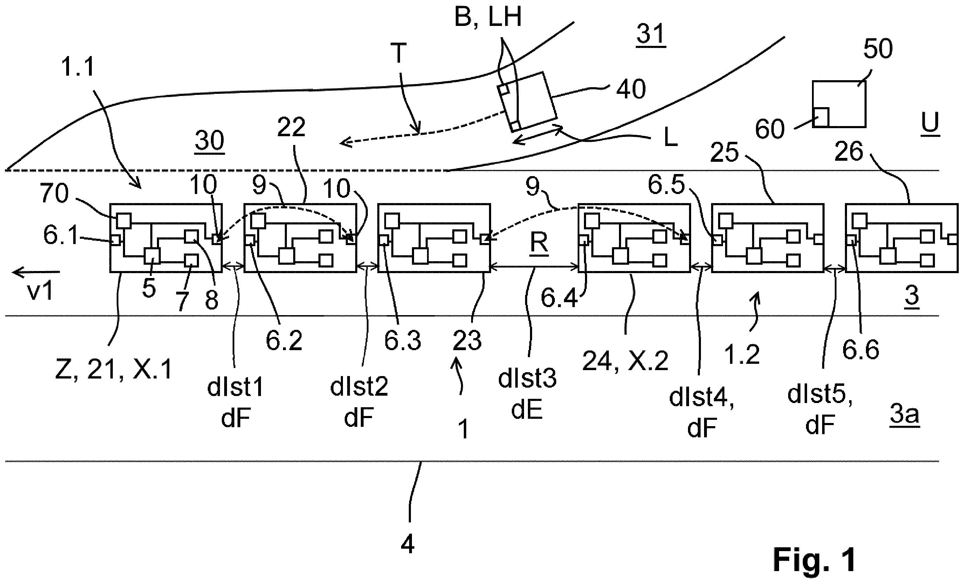

Gemäß Figur 1 ist ein Fahrzeugverbund 1 aus einer Anzahl N von sechs Fahrzeugen 2i mit i = 1, 2, ... N dargestellt, die sich in einem bestimmten Ist-Abstand dlstj, mit j = 1, 2, ... N-1 zueinander auf einer Fahrbahn 3 einer mehrspurigen Straße 4, z.B. eines Highways, bewegen. Als Fahrzeugverbund 1 wird dabei im Rahmen der Erfindung eine Aneinanderreihung von Fahrzeugen 2i verstanden, die sich aufeinander abgestimmt bewegen, um durch Ausnutzung des Windschattens und Vermeiden von unnötigen Beschleunigungs- und Verzögerungsphasen einen möglichst ökonomischen Fahrbetrieb zu gewährleisten. Ein derartiger Fahrzeugverbund 1 ist dem Fachmann auch als Fahrzeugkolonne oder Platoon bekannt.

Der Fahrzeugverbund 1 gemäß Fig.1 ist bei seiner normalen Bewegung auf der Fahrbahn 3 in eine Anzahl M von zwei Teil-Fahrzeugverbünden 1.1, 1.2 aufgeteilt, wobei einem Führungs-Teil-Fahrzeugverbund 1.1 ein Folge-Teil-Fahrzeugverbund 1.2 folgt, wobei jeder Teil-Fahrzeugverbund 1.1, 1.2 jeweils aus drei Fahrzeugen 2i besteht. Sind weitere Fahrzeuge 2i, d.h. N>6, im Fahrzeugverbund 1 vorgesehen, können auch mehr als zwei Teil-Fahrzeugverbünde 1.k mit k=1, 2, 3,..., M, d.h. mehr als ein Folge-Teil-Fahrzeugverbund 1.k, k>1, und/oder Teil-Fahrzeugverbünde 1.k mit jeweils mehr als drei Fahrzeugen 2i, vorzugsweise aber nicht mehr als jeweils acht Fahrzeugen 2.i, ausgebildet werden.

Das erste Fahrzeug 21, 24 des jeweiligen Teil-Fahrzeugverbundes 1.k wird im Folgenden als Führungsfahrzeug X.k des k. Teil-Fahrzeugverbundes 1.k bezeichnet, das somit den jeweiligen Teil-Fahrzeugverbund 1.k anführt. Demnach ist in Fig. 1 das erste Fahrzeug 21 des Fahrzeugverbundes 1 gleichzeitig auch das Führungsfahrzeug X.1 des ersten Teil-Fahrzeugverbundes 1.1 bzw. des Führungs-Teil-Fahrzeugverbundes 1.1 und das vierte Fahrzeug 24 des Fahrzeugverbundes 1 das Führungsfahrzeug X.2 des zweiten Teil-Fahrzeugverbundes 1.2 bzw. des ersten Folge-Teil-Fahrzeugverbundes 1.2.

Der Abstand zwischen den Teil-Fahrzeugverbünden 1.k, in Fig. 1 der dritte Ist-Abstand dlst3 zwischen dem dritten Fahrzeug 23 bzw. dem letzten Fahrzeug des ersten Teil-Fahrzeugverbundes 1.1 (Führungs-Teil-Fahrzeugverbund 1.1) und dem vierten Fahrzeug 24 bzw. dem Führungsfahrzeug X.2 des zweiten Teil-Fahrzeugverbundes 1.2 (erster Folge-Teil-Fahrzeugverbund 1.2), wird im Folgenden allgemein als Eintrittsabstand dE bezeichnet, der somit eine Länge eines Zwischenraums R zwischen den Teil-Fahrzeugverbünden 1.k angibt. Der Eintrittsabstand dE ist dabei größer als der Ist-Abstand dlstj, der zwischen Fahrzeugen 2i desselben Teil-Fahrzeugverbundes 1.1, 1.2 normalerweise eingestellt ist.

Der gesamte Fahrzeugverbund 1 aus den zwei (oder mehreren) Teil-Fahrzeugverbünden 1.kwird von einem Leitfahrzeug Z, das in Figur 1 gleichzeitig das erste Fahrzeug 21 des Fahrzeugverbundes 1 ist, koordiniert. Grundsätzlich kann aber auch eines der anderen Fahrzeuge 2i das Leitfahrzeug Z sein. Das Leitfahrzeug Z legt zum Koordinieren des Fahrzeugverbundes 1 anhand von vorbestimmten Parametern fest, in welchem Soll-Abstand dSollj mit j = 1, 2, ... N-1 sich die einzelnen Fahrzeuge 2i des Fahrzeugverbundes 1 zueinander bewegen sollen.

Der Soll-Abstand dSollj zwischen den einzelnen Fahrzeugen 2i kann unterschiedlich festgelegt werden:
Einerseits kann die Festlegung beispielsweise in Abhängigkeit von fahrzeugspezifischen Eigenschaften des jeweiligen Fahrzeuges 2i, beispielsweise eines Bremsvermögens, eines Fahrzeugstatus, etc. sowie unter der Vorgabe erfolgen, dass ein besonders effizienter Fahrbetrieb im gesamten Fahrzeugverbund 1 unter Ausnutzung des Windschattens ermöglicht wird. Ein derartig festgelegter sog. Verbund-Folgeabstand dF als Soll-Abstand dSollj zwischen den jeweiligen Fahrzeugen 2i darf geringer als der übliche Sicherheitsabstand zwischen zwei Fahrzeugen sein, da sich die Fahrzeuge 2i aufeinander abgestimmt bewegen und dazu untereinander kommunizieren, wodurch ein sicherer Fahrbetrieb auch dann noch gewährleistet werden kann.

Andererseits kann der Soll-Abstand dSollj aber auch in Abhängigkeit davon festgelegt werden, welches Fahrzeug 2i des Fahrzeugverbundes 1 das Führungsfahrzeug X.k eines Teil-Fahrzeugverbundes 1.k, insbesondere Folge-Teil-Fahrzeugverbundes 1.k, k>1 werden soll. Das erste Führungsfahrzeug X.1 des Führungs-Teil-Fahrzeugverbundes 1.1 ist davon ausgeschlossen, da dieses keinen Soll-Abstand dSollj zu einem vorausfahrenden Fahrzeug 2i desselben Fahrzeugverbundes 1 einstellen kann. Jedoch kann vorgesehen sein, dass über das Abstandsregelsystem 5 des Führungsfahrzeuges X.1 des Führungs-Teil-Fahrzeugverbundes 1.1 ein üblicher Sicherheitsabstand zu einem vorausfahrenden Fahrzeug in der Umgebung U, das nicht Teil des Fahrzeugverbundes 1 ist, eingestellt wird. Das Leitfahrzeug Z legt somit fest, wo der Fahrzeugverbund 1 geteilt werden soll. Dazu wird für den Soll-Abstand dSollj des betreffenden Fahrzeuges 2i der Eintrittsabstand dE festgelegt, der dann üblicherweise größer ist als der festgelegte Verbund-Folgeabstand dF für die Fahrzeuge 2i innerhalb eines Teil-Fahrzeugverbundes 1.k.

Um den jeweils festgelegten Soll-Abstand dSollj zwischen den einzelnen Fahrzeugen 2i einstellen zu können, weist jedes der Fahrzeuge 2i ein Abstandsregelsystem 5 auf, wobei das jeweils i-te Fahrzeug 2i darüber nach Art eines Abstandsregeltempomaten den Ist-Abstand dlstj (mit j = i - 1) zum jeweils vorausfahrenden (i-1 )-ten Fahrzeug 2(i-1) über ein internes Umgebungserfassungssystem 6i im eigenen Fahrzeug 2i erfasst und den erfassten Ist-Abstand dlstj durch einen Eingriff in das Bremssystem 7 und/oder das Antriebssystem 8 des eigenen Fahrzeuges 2i auf den vom Leitfahrzeug Z vorgegebenen Sollabstand dSollj (mit j = i - 1) zum vorausfahrenden (i-1 )-ten Fahrzeug 2(i-1) einregelt.

Die Übermittlung des festgelegten Soll-Abstandes dSollj vom Leitfahrzeug Z auf die jeweiligen Fahrzeuge 2i des Fahrzeugverbundes 1 erfolgt über eine drahtlose V2X-Kommunikation 9, die zwischen den einzelnen Fahrzeugen 2i ausgebildet ist. Dazu ist in jedem der Fahrzeuge 2i eine V2X-Einheit 10 angeordnet, die in herkömmlicher Weise ein Sende- und Empfangsmodul aufweist, über das insbesondere der Soll-Abstand dSollj gesendet und empfangen werden kann, so dass dieser über das Abstandsregelsystem 5 im jeweiligen Fahrzeug 2i eingestellt werden kann. Das Abstandsregelsystem 5 ist dazu mit der V2X-Einheit 10 in beliebiger Weise signalleitend verbunden.

Als V2X (Vehicle-to-Everything) wird hierbei eine drahtlose Kommunikationsmöglichkeit bezeichnet, die es erlaubt, den einzelnen Fahrzeugen 2i Signale über ein bestimmtes Interface bzw. gemäß einem bestimmten Protokoll bereitzustellen, um sich zu koordinieren. Verläuft eine derartige Kommunikation nur zwischen den Fahrzeugen 2i wird sie als V2V (Vehicle-to-Vehicle) bezeichnet. Es ist jedoch auch eine Kommunikation zwischen einem Fahrzeug 2i und einer Infrastruktureinrichtung 50 am Rande der Fahrbahn 3 möglich, was dann als V2I (Vehicle-to-Infrastructure) bezeichnet wird.

Als Übertragungsart kann beispielsweise eine kurzreichweitige DSRC-Verbindung (Dedicated Short-Range Communication) oder eine drahtlose Verbindung nach einem der IEEE-Standards, z.B. IEEE 802.11 (Wireless Access in Vehicular Environments (WAVE)) oder IEEE 802.11p (vgl. IEEE 802.11 Wireless LAN medium access layer (MAC)) verwendet werden. Dabei kann die V2X-Einheit 10 beispielsweise eine Signalübertragung über WiFi, WLAN, Ultra Mobile Broadband (UMB), Bluetooth (BT), Near Field Communication (NFC), Radio-Freguency Identification (RFID), Z-wave, ZigBee, Low power Wireless Personal Area Networks (6LoWPAN), Wireless Highway Addressable Remote Transducer (HART) Protocol, Wireless Universal Serial Bus (USB) oder über optische Kommunikationsmöglichkeiten, z.B. Infrared Data Association (IrDA), ermöglichen. Alternativ sind aber auch Übertragungen über die (Mobilfunk)standards 3GPP LTE, LTE-Advanced, E-UTRAN, UMTS, GSM, GSM/ EDGE, WCDMA, Time Division Multiple Access (TDMA), Freguency Division Multiple Access (FDMA), Orthogonal FDMA (OFDMA), Single-Carrier FDMA (SC-FDMA), Worldwide Interoperability for Microwave Access (WiMax), Ultra Mobile Broadband (UMB), High Speed Packet Access (HSPA), Evolved Universal Terrestrial Radio Access (E-UTRA), Universal Terrestrial Radio Access (UTRA), GSM EDGE Radio Access Network (GERAN), etc. möglich.

Der somit zusammengestellte Fahrzeugverbund 1 aus den zwei Teil-Fahrzeugverbünden 1.k bewegt sich nach Einstellung der jeweiligen Sollabstände dSollj mit einer bestimmten Verbund-Geschwindigkeit v1 auf der Fahrbahn 3, wobei sich jeder Teil-Fahrzeugverbund 1.k im Normalzustand mit der Verbund-Geschwindigkeit v1 fortbewegt. Bewegt sich ein derartiger Fahrzeugverbund 1 auf einen Auffahrt-Bereich 30 der mehrspurigen Straße 4 zu, über den ein auffahrendes Fahrzeug 40 von einer Auffahrt 31 auf die mehrspurige Straße 4 wechseln kann, so kann der Fahrzeugverbund 1 ein Hindernis für dieses auffahrende Fahrzeug 40 darstellen. Dies ist genau dann der Fall, wenn das auffahrende Fahrzeug 40 im Auffahrt-Bereich 30 zum Auffahren auf die Fahrspur 3 bereit ist, während der Fahrzeugverbund 1 gerade den Auffahrt-Bereich 30 passiert.

Um dem zu begegnen, kann das auffahrende Fahrzeug 40 vorausschauend derartig die Auffahrt 31 entlangfahren, dass es vor oder nach dem Fahrzeugverbund 1 auf die Fahrspur 3 wechselt. Bei einem sehr langen Fahrzeugverbund 1 kann dies allerdings ein Sicherheitsrisiko darstellen, da das auffahrende Fahrzeug 40 zu stark beschleunigen oder auf dem Standstreifen fahren muss, um vor dem Fahrzeugverbund 1 einzuscheren, oder stark und unter Umständen fast in den Stillstand abbremsen muss, um nach dem Fahrzeugverbund 1 einzuscheren.

Eine weitere Möglichkeit ist das Einscheren zwischen den Fahrzeugen 2i des Fahrzeugverbundes 1. Der Verbund-Folgeabstand dF zwischen den Fahrzeugen 2i eines Teil-Fahrzeugverbundes 1.k ist allerdings normalerweise so gering, z.B. 10m, dass ein auffahrendes Fahrzeug 40 bei einer hohen Verbund-Geschwindigkeit v1 von ca. 70-90km/h nur sehr schwer dazwischen einscheren kann, ohne dabei ein erhöhtes Sicherheitsrisiko einzugehen.

Durch die erfindungsgemäße Aufteilung des Fahrzeugverbundes 1 wird es dem auffahrenden Fahrzeug 40 jedoch vereinfacht, zwischen den mehreren Teil-Fahrzeugverbünden 1.k in den Zwischenraum R auf die mehrspurige Straße 3 aufzufahren, da der Eintrittsabstand dE größer ist als der Verbund-Folgeabstand dF. Der Eintrittsabstand dE kann beispielsweise zwischen 45m und 70m betragen. Somit wird dem auffahrenden Fahrzeug 40 je nach Anzahl M an Teil-Fahrzeugverbünden 1.k mindestens eine weitere Möglichkeit zum Einscheren gegeben, die weniger sicherheitskritisch ist als das Einscheren zwischen den Fahrzeugen 2i eines Teil-Fahrzeugverbundes 1.k oder vor und nach dem gesamten Fahrzeugverbund 1.

Zum Eintritt zwischen den Fahrzeug-Verbünden 1.k ist dabei lediglich eine vorausschauende leichte Geschwindigkeitsanpassung durch das auffahrende Fahrzeug 40 nötig. Der Fahrzeugverbund 1 muss im einfachsten Fall nicht reagieren, so dass die koordinierte Fahrt nicht gestört wird und Abbremsungen oder Beschleunigungen gänzlich vermieden werden können. Damit kann ein erhöhtes Sicherheitsrisiko sowohl für das auffahrende Fahrzeug 40 als auch für den Fahrzeugverbund 1 bzw. auch weitere Verkehrsteilnehmer vermieden werden.

Der Eintrittsabstand dE wird hierbei derartig festgelegt, dass auffahrende Fahrzeuge 40, vorzugsweise PKWs, mit Fahrzeuglängen L von üblicherweise bis zu 6 Metern, einscheren können und dabei nicht gefährdet werden. Somit wird für das auffahrende Fahrzeug 40 eine Maximallänge LMax angesetzt. Ergänzend wird ein Mindestabstand dmin berücksichtigt, der zwischen dem auffahrenden Fahrzeug 40 der Fahrzeuglänge L und dem jeweils davor und dahinter fahrenden Teil-Fahrzeugverbund 1.k auf jeden Fall eingehalten werden soll. Der Eintrittsabstand dE kann demnach beispielsweise auf einen Wert zwischen 25m und 60m, insbesondere 35m, festgelegt werden. Dabei ist zu berücksichtigen, dass auffahrende Fahrzeuge 40 normalerweise nur kurz auf der Fahrspur 3 des Fahrzeugverbundes 1 zwischen den Teil-Fahrzeugverbünden 1.k verbleiben und kurze Zeit später die Spur wechseln werden, um den Fahrzeugverbund 1 zu überholen oder sich hinter den Fahrzeugverbund 1 zurückfallen lassen.

Weiterhin wird bei der Festlegung des Eintrittsabstandes dE als Soll-Abstand dSollj berücksichtigt, dass die Fahrzeuge 2i des gesamten Fahrzeugverbundes 1 über die drahtlose V2X-Kommunikation 9 weiterhin kommunizieren können. Die Teil-Fahrzeugverbünde 1.k werden demnach nicht zu weit voneinander getrennt, um weiterhin einen aufeinander abgestimmten und effizienten Fahrbetrieb über den gesamten Fahrzeugverbund 1 zu gewährleisten. Gleichzeitig wird dennoch das Einscheren eines auffahrenden Fahrzeuges 40 sicher und zuverlässig ermöglicht, ohne dabei den Fahrbetrieb des Fahrzeugverbundes 1 zu stören.

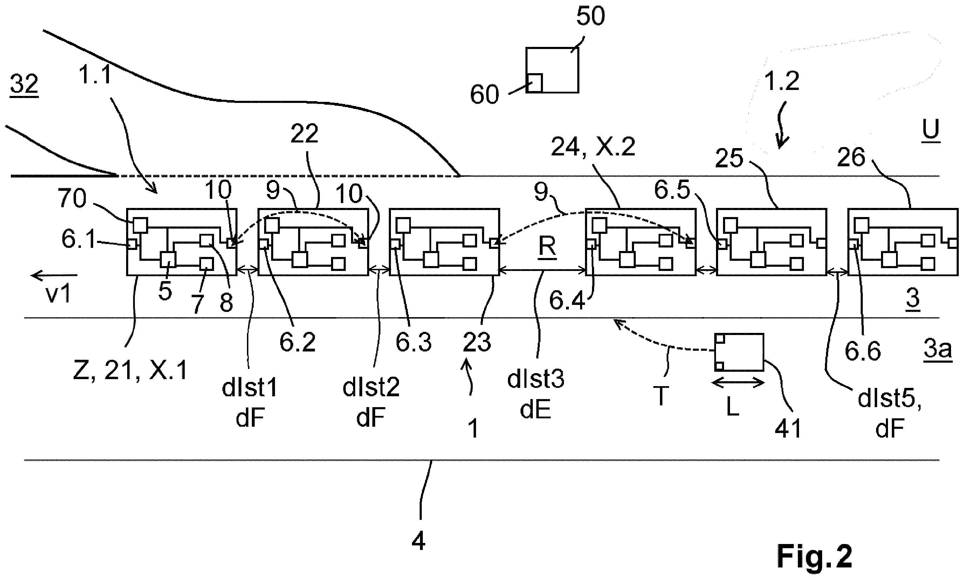

In Fig. 2 ist eine Abfahrsituation dargestellt, anhand derer im Folgenden eine weitere Ausführungsform der Erfindung beschrieben wird. Diese läuft vergleichbar zu der in Fig. 1 dargestellten Auffahrsituation ab.

Demnach ist vorgesehen, dass sich ein abfahrbereites Fahrzeug 41 auf der benachbarten Fahrbahn 3a zum Fahrzeugverbund 1 befindet. Dieses beabsichtigt, die nächste Ausfahrt 32 von der mehrspurigen Straße 4 zu nehmen, wobei der Fahrzeugverbund 1 auch hier wieder ein Hindernis darstellen kann. Das abfahrbereite Fahrzeug 41 kann demnach durch Beschleunigen oder Verzögern versuchen, vor oder nach dem Fahrzeugverbund 1 auf die Fahrspur 3 des Fahrzeugverbundes 1 zu wechseln, um anschließend auf die Ausfahrt 32 zu gelangen, was allerdings nicht immer möglich ist, ohne den anderen Verkehr zu behindern.

Weiterhin kann es auch zwischen den Fahrzeugen 2i des Fahrzeugverbundes 1 auf die Fahrbahn 3 einscheren. Auch hier kann durch die Aufteilung in zwei Teil-Fahrzeugverbünde 1.k eine zusätzliche sichere Möglichkeit für einen Spurwechsel in Richtung der Ausfahrt 32 geschaffen werden, da das abfahrbereite Fahrzeug 41 durch eine entsprechende Geschwindigkeitsanpassung vorausschauend in den Zwischenraum R mit dem Eintrittsabstand dE einscheren kann, der für derartige Spurwechsel vorgesehen ist.

Weiterhin kann der Zwischenraum R zwischen den Teil-Fahrzeugverbünden 1.k aber auch für andere, kurzzeitige Einschervorgänge zur Verfügung stehen, in denen ein anderes Fahrzeug einen Spurwechsel "durch" den Fahrzeugverbund 1 beabsichtigt. Für alle genannten Einschervorgänge gilt dabei, dass das jeweilige einscherbereite Fahrzeug 40, 41 nicht mit dem Fahrzeugverbund 1 kommuniziert, um den Spurwechsel mit diesem abzustimmen. Somit wird keine Anforderung vom jeweiligen einscherbereiten Fahrzeug 40, 41 ausgegeben, aufgrund dessen die Fahrzeuge 2i des Fahrzeugverbundes 1 reagieren können oder könnten.

Gemäß einer angepassten Ausführungsform kann für die genannten Spurwechselvorgänge "durch" den Fahrzeugverbund 1 vorgesehen sein, dass der Soll-Abstand dSollj zwischen den Teil-Fahrzeugverbünden 1.k bei Vorliegen gewisser Eintrittskriterien K angepasst, vorzugsweise ausgehend vom Eintritts-Abstand dE erhöht wird, wobei dies vom Leitfahrzeug Z aus koordiniert wird. Demnach reagiert der Fahrzeugverbund 1 unter gegebenen Umständen doch auf bestimmte Ereignisse in einer Umgebung U, wenn ein Einstellen des Eintritts-Abstandes dE nicht mehr sinnvoll erscheint. Die Ereignisse werden hierbei allerdings nicht durch eine aktive Kommunikation zwischen dem einscherenden Fahrzeug 40, 41 und den Fahrzeugen 2i des Fahrzeugverbundes 1 ausgelöst. Vielmehr erkennt der Fahrzeugverbund 1 ein solches Ereignis selbst.

Das Eintrittskriterium K kann beispielsweise dann erfüllt sein, wenn festgestellt wird, dass ein auffahrendes Fahrzeug 40 oder ein abfahrbereites Fahrzeug 41 oder das aus anderen Gründen einscherende Fahrzeug zu lang ist, d.h. die Maximallänge LMax überschreitet, und damit unter Sicherheitsaspekten nicht in den Zwischenraum R mit dem Eintritts-Abstand dE einscheren kann. Dabei kann insbesondere berücksichtigt werden, dass auch ein Einscheren vor oder nach dem Fahrzeugverbund 1 nicht möglich oder sinnvoll erscheint. Wird beispielsweise festgestellt, dass ein möglicherweise einscherendes Fahrzeug 40, 41 der Fahrzeuglänge L bei dem derzeit eingestellten Soll-Abstand dSollj bzw. dem Eintrittsabstand dE unter Berücksichtigung des Mindestabstandes dmin (nach vorn und nach hinten) nicht in den Zwischenraum R "passt", d.h. L + 2 x dmin > dE = dSollj, kann das Eintrittskriterium K als erfüllt angesehen werden. Der Soll-Abstand dSollj wird daraufhin ausgehend vom Eintrittsabstand dE um einen gewissen Abstandsbetrag dB beispielsweise inkrementell vergrößert, bis wieder gilt: dSollj = dE + dB ≥ L + 2 x dmin. Somit wird die Differenz zwischen der Fahrzeuglänge L und der Maximallänge LMax durch den Abstandsbetrag dB ausgeglichen.

Das Prüfen des Eintrittskriteriums K erfolgt im Leitfahrzeug Z anhand von Umgebungsdaten UD, die über die drahtlose V2X-Kommunikation 9 bereitgestellt werden. Die Umgebungsdaten UD können hierbei von den Fahrzeugen 2i des Fahrzeugverbundes 1 selbst oder von außerhalb, beispielsweise von einer Infrastruktureinrichtung 50, bereitgestellt werden. Die Umgebungsdaten UD beinhalten hierbei aus der Umgebung U aufgenommene Informationen, aus denen sich herleiten lässt,
1.) ob sich in der Umgebung U um den Fahrzeugverbund 1 ein Fahrzeug 40, 41 befindet, das voraussichtlich beabsichtigt auf die Fahrbahn 3 des Fahrzeugverbundes 1 zu wechseln, und
2.) ob dieses erfasste Fahrzeug 40, 41 mit der Fahrzeuglänge L bei dem festgelegten Eintrittsabstand dE unter Berücksichtigung des Mindestabstandes dmin in den Zwischenraum R zwischen den Teil-Fahrzeugverbünden 1.k sicher und zuverlässig einscheren kann, d.h. ob dessen Fahrzeuglänge L größer oder kleiner als die angesetzte Maximallänge LMax ist.

Diese Informationen können beispielsweise aus den Umgebungsdaten UD extrahiert werden, die von dem internen Umgebungserfassungssystem 6i im jeweiligen Fahrzeug 2i des Fahrzeugverbundes 1 oder aber die von einem externen Umgebungserfassungssystem 60 außerhalb der Fahrzeuge 2i, beispielsweise an der jeweiligen Infrastruktureinrichtung 50, aufgenommen und ausgegeben werden. Dazu weist das jeweilige Umgebungserfassungssystem 6i, 60 beispielsweise eine Kamera und/oder ein Radarsystem und/oder LI-DAR auf, die jeweils Objekte in der Umgebung U erfassen können und in Abhängigkeit davon jeweils die Umgebungsdaten UD ausgeben. Vorteilhafterweise sind übliche Fahrzeuge 2i mit einem internen Umgebungserfassungssystem 6i z.B. im Rahmen des Abstandsregelsystems 5 bereits ausgestattet, so dass keine Nachrüstung erforderlich ist und lediglich für eine Ausgabe über die V2X-Kommunikation 9 durch die V2X-Einheit 10 zu sorgen ist, so dass das Leitfahrzeug Z darauf zugreifen kann.

Vorteilhafterweise kann das Leitfahrzeug Z die aktuelle Umgebungssituation dadurch nicht nur in Abhängigkeit des Blickwinkels des eigenen Umgebungserfassungssystems 61 bewerten, sondern kann die aktuelle Umgebungssituation auch aus einem anderen Blickwinkel, d.h. beispielsweise aus der Sicht der hinteren Fahrzeuge 2i mit i >1 oder aber der Infrastruktureinrichtung 50 abseits der Fahrbahn 3 erfassen und bewerten. Dabei kann auch eine Fusion von Umgebungsdaten UD unterschiedlicher Umgebungserfassungssysteme 6i, 60 stattfinden, um die Zuverlässigkeit bei der Prüfung des Eintrittskriteriums K zu erhöhen. So kann beispielsweise ein weiter hinten fahrendes Fahrzeug 2i des Fahrzeugverbundes 1 eine genauere Tiefeninformation über die Umgebung U bzw. erkannte Fahrzeuge 40, 41 liefern und damit eine genauere Bestimmung der zukünftigen Fahrbewegung des Fahrzeuges 40, 41, z.B. in Form einer prädizierten Trajektorie T, sowie der Fahrzeuglänge L ermöglichen. Zudem können von einem weiter hinten liegenden Fahrzeug 2i des Fahrzeugverbundes 1 Umgebungsdaten UD erfasst werden, die beispielsweise von dem Leitfahrzeug Z nicht erfasst werden können, da der Erfassungsbereich des Umgebungserfassungssystems 61 im Leitfahrzeug Z dies nicht zulässt.

Die Auswertung bzw. Bewertung der Umgebungsdaten UD erfolgt dabei in einer Auswerteinheit 70 im Leitfahrzeug Z, in der das Eintrittskriterium K für jedes erkannte vorzugsweise sich bewegende Objekt in der Umgebung U geprüft wird. Das Bewerten eines sich bewegenden Objektes erfolgt hierbei beispielsweise durch einen Objekterfassungs-Algorithmus, der aus den ausgegebenen Umgebungsdaten UD Objektkonturen erkennt und diese zeitlich vorzugsweise tiefenaufgelöst verfolgt. Daraus kann eine Trajektorie T für das jeweilige erkannte Objekt bzw. Fahrzeug 40, 41 prädiziert werden und daraus, ob das Fahrzeug 40, 41 überhaupt beabsichtigt, in die Fahrspur 3 des Fahrzeugverbundes 1 einzuscheren, und ob dieser Einschervorgang voraussichtlich im Bereich des Zwischenraums R zwischen den Teil-Fahrzeugverbünden 1.k erfolgen wird oder nicht.

Ist ein Einschervorgang in dem Zwischenraum R wahrscheinlich, so wird im nächsten Schritt geprüft, ob eine Fahrzeugläge L des einscherbereiten Fahrzeuges 40, 41 zu dem eingestellten Eintrittsabstand dE passt, d.h. ob L + 2 x dmin > dE = dSollj bzw. L < LMax ist. Ist dies nicht der Fall, ist das Eintrittskriterium K erfüllt. Daraufhin wird vom Leitfahrzeug Z über die V2X-Kommunikation 9 ein Sollabstand dSollj an das Führungsfahrzeug X.k, k>1 des jeweiligen Folge-Teil-Fahrzeugverbundes 1.k, k>1 übermittelt, für den gilt dSollj = dE + dB ≥ L + 2 x dmin. Daraufhin wird über das Abstandsregelsystem 5 des Führungsfahrzeugs X.k, k>1 des jeweiligen Folge-Teil-Fahrzeugverbundes 1.k, k>1 dieser Soll-Abstand dSollj eingestellt, indem dieses über das Bremssystem 7 abbremst. Alle weiteren Fahrzeuge 2i dieses Folge-Teil-Fahrzeugverbundes 1.k, k>1 folgen dann der veränderten Bewegung des Führungsfahrzeuges X.k, k>1 des jeweiligen Folge-Teil-Fahrzeugverbundes 1.k, k>1, so dass die Bewegung des gesamten Fahrzeugverbundes 1 weiterhin aufeinander abgestimmt ist.

Ergänzend oder alternativ zu der Ermittlung der Trajektorie T des jeweiligen Fahrzeuges 40, 41 zum Feststellen, ob das Fahrzeug 40, 41 wahrscheinlich einscheren möchte, kann anhand der zur Verfügung stehenden Umgebungsdaten UD geprüft werden, ob das Fahrzeug 40, 41 in irgendeiner Weise über einen Einscherhinweis H anzeigt, dass es auf die Fahrbahn 3 des Fahrzeugverbundes 1 wechseln möchte. Dazu kann beispielsweise die Aktivierung eines Blinkers B des jeweiligen Fahrzeuges 40, 41 in Richtung der Fahrbahn 3 des Fahrzeugverbundes 1 als Einscherhinweis H geprüft werden. Aus den Umgebungsdaten UD kann als Einscherhinweis H auch extrahiert werden, ob das betreffende Fahrzeug 40, 41 eine Lichthupe LH aktiviert hat.

Weiterhin kann im Rahmen der Prüfung, ob das Eintrittskriterium K erfüllt ist, auch das Vorhandensein einer Auffahrt 31 oder der Ausfahrt 32 ausschlaggebend sein. Somit kann festgelegt werden, dass tatsächlich nur dann ein Spurwechsel für lange Fahrzeug 40, 41 ermöglicht wird, wenn der Fahrzeugverbund 1 mit hoher Wahrscheinlichkeit ein Hindernis für spurwechselnde Fahrzeuge 40, 41 darstellt. Dadurch kann vermieden werden, dass sich Fahrzeug 40, 41 dauerhaft zwischen die Teil-Fahrzeugverbünde 1.k setzen.

Erst wenn das Fahrzeug 40, 41 die Fahrbahn 3 des Fahrzeugverbundes 1 wieder verlassen hat, was ebenfalls über die Umgebungserfassungssysteme 6i, 60 erfasst wird, werden die beiden Teil-Fahrzeugverbünde 1.k koordiniert vom Leitfahrzeug Z wieder aneinander angenähert, indem der Eintritts-Abstand dE wieder als Soll-Abstand dSollj für das Führungsfahrzeug X.k, k>1 des jeweiligen Folge-Teil-Fahrzeugverbundes 1.k, k>1 vorgegeben wird und der Fahrzeugverbund 1 wie ursprünglich seine Fahrt fortsetzt. Dazu werden das Führungsfahrzeug X.k, k>1 des jeweiligen Folge-Teil-Fahrzeugverbundes 1.k, k>1 sowie alle weiteren Fahrzeuge 2i, die dahinter folgen, über die Abstandsregelsysteme 5 wieder aufeinander abgestimmt beschleunigt, um die koordinierte Fahrt fortzusetzen.

Grundsätzlich ist es mit dem beschriebenen Verfahren auch möglich, dass der Soll-Abstand dSollj ausgehend vom Eintritts-Abstand dE um einen Abstandsbetrag dB erhöht wird, der es ermöglicht, dass mehr als ein Fahrzeug 40, 41 in den Zwischenraum R einscheren kann. Dies kann beispielsweise dann sinnvoll sein, wenn sich zwei unmittelbar hintereinander auffahrende Fahrzeuge 40 in der Fahrsituation gemäß Fig. 1 oder sich zwei abfahrbereite Fahrzeuge 41 in der Fahrsituation gemäß Fig. 2 befinden, für die jeweils das Eintrittskriterium K erfüllt ist. Dabei ist allerdings abzuwägen, für welche Anzahl an einscherbereiten Fahrzeugen 40, 41 es sinnvoll ist, einen Zwischenraum R auszubilden, ohne dabei den weiteren Verkehr zu stören und/oder die Möglichkeit einer Abstimmung des Fahrzeugverbundes 1 zu verlieren.

Falls in allen genannten Ausführungen ein oder mehrere einscherbereite Fahrzeuge 40, 41 für einen längeren Zeitraum in dem Zwischenraum R verbleiben, kann vorgesehen sein, dass der Soll-Abstand dSollj weiter erhöht wird. Dadurch kann ein dauerhaft sicherer Fahrbetrieb auch dann gewährleistet werden, wenn ein im Fahrzeugverbund 1 fahrendes Fahrzeug 40, 41 nicht mit diesem über die V2X-Kommuikation 9 kommuniziert.

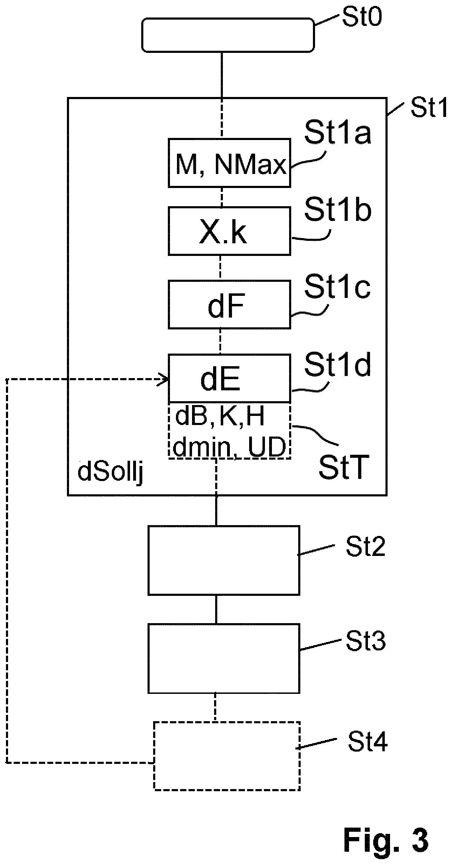

Gemäß Figur 3 kann das erfindungsgemäße Verfahren beispielsweise wie folgt durchgeführt werden:
In einem anfänglichen Schritt St0 findet eine Initialisierung statt, beispielweise mit dem Zusammenstellen des Fahrzeugverbundes 1. In einem anschließenden ersten Schritt St1 werden die Soll-Abstände dSollj zwischen den einzelnen Fahrzeugen 2i des Fahrzeugverbundes 1 koordiniert festgelegt. Dabei wird der Fahrzeugverbund 1 je nach Anzahl N an Fahrzeugen 2i in eine Anzahl M von mindestens zwei Teil-Fahrzeugverbünden 1.k unterteilt (St1a).

Die Anzahl M kann sich hierbei insbesondere nach der Maximalanzahl NMax an Fahrzeugen 2.i innerhalb eines Teil-Fahrzeugverbundes 1.k richten. Dazu werden zumindest für jeden Folge-Teil-Fahrzeugverbund 1.k, k>1 Führungsfahrzeuge X.k, k>1 festgelegt (St1b). Für die Fahrzeuge 2i innerhalb eines Teil-Fahrzeugverbundes 1.k werden anschließend Verbund-Folgeabstände dF als Soll-Abstände dSollj vorgegeben (St1 c) und für das Führungsfahrzeug X.k, k>1 des jeweiligen Folge-Teil-Fahrzeugverbundes 1.k, k>1 ein Eintritts-Abstand dE, der größer ist als der Verbund-Folgeabstand dF (St1d). Der Eintrittsabstand dE ermöglicht das Einscheren von Fahrzeugen 40, 41 mit üblichen Fahrzeuglängen L von bis zu 6 Metern und Berücksichtigung eines Mindestabstandes dmin nach vorn und hinten. Anschließend werden die festgelegten Soll-Abstände dSollj in einem zweiten Schritt St2 an die jeweiligen Fahrzeuge 2i im Fahrzeugverbund über die V2X-Kommunikation 9 übertragen und in einem dritten Schritt St3 über das Abstandsregelsystem 5 im jeweiligen Fahrzeug 2i umgesetzt.

Gemäß einer Ausführung kann vorgesehen sein, dass im Schritt St1d der Soll-Abstand dSollj auf den Eintrittsabstand dE zuzüglich eines Abstandsbetrages dB eingestellt wird, d.h. der Zwischenraum R zwischen den Teil-Fahrzeugverbünden 1.k wird erhöht, wenn z.B. festgestellt wird, dass ein einscherbereites Fahrzeug 40, 41 unter Berücksichtigung des Mindest-Abstandes dmin nicht in den Zwischenraum R passt.

Dies erfolgt in einem Teilschritt StT über die Auswertung der Umgebungsdaten UD und der Prüfung der Eintrittskriterien K sowie der Einscherhinweise H wie oben beschrieben. Nachdem das Fahrzeug 40, 41 den Zwischenraum R wieder verlassen hat, kann in einem vierten Schritt St4 ein Zusammenführen der Teil-Fahrzeugverbünde 1.k stattfinden, wobei dazu der Soll-Abstand dSollj des Führungsfahrzeuges X.k des jeweiligen Folge-Teil-Fahrzeugverbundes 1.k, k>1 wieder auf den ursprünglichen Eintritts-Abstand dE festgelegt wird. Die Überprüfung in Schritt St1d und das anschließende Zusammenführen im vierten Schritt St4 kann fortlaufend durchgeführt werden, um beispielsweise bei jeder Auffahrt 31 oder Ausfahrt 32 entsprechend reagieren zu können.

### Bezugszeichenliste (Teil der Beschreibung)

- 1: Fahrzeugverbund
- 1.k: k. Teil-Fahrzeugverbund
- 1.1: Führungs-Teil-Fahrzeugverbund
- 1.k, k>1: Folge-Teil-Fahrzeugverbund
- 2i: i. Fahrzeug im Fahrzeugverbund 1
- 3: Fahrbahn des Fahrzeugverbundes 1
- 3a: benachbarte Fahrbahn
- 4: mehrspurige Straße
- 5: Abstandsregelsystem
- 6i: internes Umgebungserfassungssystem im i. Fahrzeug 2i
- 7: Bremssystem
- 8: Antriebssystem
- 9: drahtlose Kommunikation
- 10: V2X-Einheit
- 30: Auffahrt-Bereich
- 31: Auffahrt
- 32: Ausfahrt
- 40: auffahrendes Fahrzeug (einscherbereites Fahrzeug)
- 41: abfahrbereites Fahrzeug (einscherbereites Fahrzeug)
- 50: Infrastruktureinrichtung
- 60: externes Umgebungserfassungssystem z.B. in der Infrastruktureinrichtung 50
- 70: Auswerteeinheit

- B: Blinker
- dB: Abstandsbetrag
- dE: Eintritts-Abstand
- dF: Verbund-Folgeabstand
- dlstj: Ist-Abstand vor dem i. Fahrzeug mit j = i - 1
- dmin: Mindestabstand
- dSollj: Soll-Abstand vor dem i. Fahrzeug mit j = i - 1
- E: Eintrittsbedingungen
- H: Einscherhinweis
- i, j, k: Index
- K: Eintrittskriterium
- L: Fahrzeuglänge
- LMax: Maximallänge
- LH: Lichthupe
- M: Anzahl an Teil-Fahrzeugverbünden 1.k
- N: Anzahl an Fahrzeugen 2i
- NMax: Maximalanzahl an Fahrzeugen 2i in einem Teil-Fahrzeugverbund
- R: Zwischenraum
- T: Trajektorie
- U: Umgebung
- UD: Umgebungsdaten
- v1: Verbundgeschwindigkeit
- X.k: Führungsfahrzeug des k. Teil-Fahrzeugverbundes
- Z: Leitfahrzeug
- St1, St1a, St1b, St1c, St1d, StT, St2, St3, St3: Schritte des Verfahrens

## Patentansprüche

1. Verfahren zum Koordinieren eines Fahrzeugverbundes (1) aus einer Anzahl (N) an Fahrzeugen (2i, i=1 ,2,..,N), wobei sich die Fahrzeuge (2i) des Fahrzeugverbundes (1) in vorgegebenen Soll-Abständen (dSollj; j=1, 2, ...N-1) zueinander auf einer Fahrbahn (3) bewegen (St1) und die Fahrzeuge (2i) über eine V2X-Kommunikation (9) untereinander drahtlos kommunizieren, wobei der vorgegebene Soll-Abstand (dSollj) vom jeweiligen Fahrzeug (2i) über ein Abstandsregelsystem (5) eingestellt wird,wobei die Soll-Abstände (dSollj) derartig festgelegt werden, dass der Fahrzeugverbund (1) dauerhaft in eine festgelegte Anzahl (M) von mindestens zwei Teil-Fahrzeugverbünden (1.k, k=1, 2,...,M) unterteilt ist (St1a), so dass einem Führungs-Teil-Fahrzeugverbund (1.1) mindestens ein Folge-Teil-Fahrzeugverbund (1.k, k>1) folgt, wobei dazu
- zumindest jedem Folge-Teil-Fahrzeugverbund (1.k, k>1) ein eigenes Führungsfahrzeug (X.k, k>1) zugeordnet wird (St1b), wobei das Führungsfahrzeug (X.k, k>1) des jeweiligen Folge-Teil-Fahrzeugverbundes (1.k, k>1) den jeweiligen Folge-Teil-Fahrzeugverbund (1.k, k>1) als erstes Fahrzeug (2i) anführt; und
- dem Führungsfahrzeug (X.k, k>1) des jeweiligen Folge-Teil-Fahrzeugverbundes (1.k, k>1) ein Soll-Abstand (dSollj) vorgegeben wird, der mindestens einem vorab festgelegten Eintrittsabstand (dE) entspricht (St1d), der in jedem Fall zwischen den Teil-Fahrzeugverbünden einzuhalten ist,
wobei der Eintrittsabstand (dE) derartig festgelegt ist, dass sich nach Einstellen des Eintrittsabstandes (dE) als Soll-Abstand (dSollj) zu einem direkt vorausfahrenden Fahrzeug (2i) desselben Fahrzeugverbundes (1) ein Zwischenraum (R) zwischen den jeweiligen Teil-Fahrzeugverbünden (1.k) ausbildet, so dass ein einscherbereites Fahrzeug (40, 41) mit einer Fahrzeuglänge (L), die eine vorab festgelegte Maximallänge (LMax) nicht überschreitet, zwischen den mindestens zwei Teil-Fahrzeugverbünden (1.k) auf die Fahrbahn (3) des Fahrzeugverbundes (1) in den Zwischenraum (R) wechseln kann, wobei der Soll-Abstand (dSollj), der dem Führungsfahrzeug (X.k, k>1) des jeweiligen Folge-Teil-Fahrzeugverbundes (1.k, k>1) vorgegeben wird, unter der Bedingung festgelegt wird, dass Fahrzeuge (2i) unterschiedlicher Teil-Fahrzeugverbünde (1.k) nach Einstellen dieses Soll-Abstandes (dSollj) weiterhin über die V2X-Kommunikation (9) drahtlos miteinander mittelbar oder unmittelbar kommunizieren können zum Abstimmen des gesamten Fahrzeugverbundes (1).

2. Verfahren nach Anspruch 1, **dadurch gekennzeichnet, dass** der Eintrittsabstand (dE) in Abhängigkeit der Maximallänge (LMax) sowie eines Mindest-Abstandes (dmin) vor und nach dem einscherbereiten Fahrzeug (40, 41) festgelegt wird, wobei die Maximallänge (LMax) zwischen 5m und 10m, vorzugsweise 6m, beträgt und der Mindest-Abstand (dmin) zwischen 10m und 25m jeweils vor und nach dem einscherbereiten Fahrzeug (40, 41) liegt, so dass der Eintrittsabstand (dE) auf zwischen 25m und 60m, vorzugsweise auf 35 Meter, festgelegt wird.

3. Verfahren nach einem der vorhergehenden Ansprüche, **dadurch gekennzeichnet, dass** allen anderen Fahrzeugen (2i) des Fahrzeugverbundes (1), die keine Führungsfahrzeuge (X.k, k>1) eines Folge-Teil-Fahrzeugverbundes (1.k, k>1) sind, ein Soll-Abstand (dSollj) zu einem diesem direkt vorausfahrenden Fahrzeug (2i) desselben Teil-Fahrzeugverbundes (1.k) vorgegeben wird, der einem Verbund-Folgeabstand (dF) entspricht (St1c), wobei der Verbund-Folgeabstand (dF) kleiner ist als der Eintrittsabstand (dE).

4. Verfahren nach Anspruch 3, **dadurch gekennzeichnet, dass** der Verbund-Folgeabstand (dF) in Abhängigkeit von fahrdynamischen Eigenschaften der Fahrzeuge (2i) des Fahrzeugverbundes (1) eingestellt wird, wobei der Verbund-Folgeabstand (dF) weniger als 25 Meter, insbesondere weniger als 15 Meter, beträgt.

5. Verfahren nach Anspruch 4, **dadurch gekennzeichnet, dass** die fahrdynamischen Eigenschaften der Fahrzeuge (2i) des Fahrzeugverbundes (1) über die V2X-Kommunikation (9) übertragen werden zum aufeinander abgestimmten Festlegen des Verbund-Folgeabstandes (dF).

6. Verfahren nach einem der vorhergehenden Ansprüche, **dadurch gekennzeichnet, dass** im Rahmen der Unterteilung des Fahrzeugverbundes (1) in mindestens zwei Teil-Fahrzeugverbünde (1.k) durch Vorgabe und Einstellung des Eintrittsabstandes (dE) als Soll-Abstand (dSollj) im Führungsfahrzeug (X.k, k>1) des jeweiligen Folge-Teil-Fahrzeugverbundes (1.k, k>1) nicht mit einem einscherbereiten Fahrzeug (40, 41) über die V2X-Kommunikation (9) kommuniziert wird.

7. Verfahren nach einem der vorhergehenden Ansprüche, **dadurch gekennzeichnet, dass** bei der Festlegung der Anzahl (M) an Teil-Fahrzeugverbünden (1.k) berücksichtigt wird, dass jeder Teil-Fahrzeugverbund (1.k) aus einer Maximalanzahl (NMax) an Fahrzeugen (2i) besteht, wobei die Maximalanzahl (NMax) zwischen drei und acht, besonders bevorzugt bei fünf, liegt.

8. Verfahren nach einem der vorhergehenden Ansprüche, **dadurch gekennzeichnet, dass** der Soll-Abstand (dSollj), der dem Führungsfahrzeug (X.k, k>1) des jeweiligen Folge-Teil-Fahrzeugverbundes (1.k, k>1) vorgegeben wird und der mindestens dem Eintrittsabstand (dE) entspricht, zusätzlich in Abhängigkeit davon festgelegt wird, ob der durch den Eintritts-Abstand (dE) ausgebildete Zwischenraum (R) zwischen den jeweiligen Fahrzeug-Verbünden (1.k) ein Einscheren eines als einscherbereit erkannten Fahrzeuges (40, 41) der Fahrzeuglänge (L) erlaubt, wobei bei einem Feststellen, dass ein Einscheren nicht möglich ist, der Soll-Abstand (dSollj) ausgehend vom Eintrittsabstand (dE) erhöht wird.

9. Verfahren nach Anspruch 8, **dadurch gekennzeichnet, dass** zur Festlegung des Soll-Abstandes (dSollj) geprüft wird, ob die Fahrzeuglänge (L) des als einscherbereit erkannten Fahrzeuges (40, 41) die vorgegebene Maximallänge (LMax) überschreitet, wobei der Soll-Abstand (dSollj) bei einem Überschreiten der Maximallänge (LMax) ausgehend vom Eintrittsabstand (dE) um einen Abstandsbetrag (dB) erhöht wird.

10. Verfahren nach Anspruch 8 oder 9, **dadurch gekennzeichnet, dass** das Erkennen, ob ein Fahrzeug (40, 41) einscherbereit ist, und die Ermittlung der Fahrzeuglänge (L) des als einscherbereit erkannten Fahrzeuges (40, 41) in Abhängigkeit von Umgebungsdaten (UD) erfolgt, wobei die Umgebungsdaten (UD) von mindestens einem Umgebungserfassungssystem (6i, 60) ausgegeben werden, wobei das jeweilige Umgebungserfassungssystem (6i, 60) eine Umgebung (U) um den Fahrzeugverbund (1) überwacht.

11. Verfahren nach Anspruch 10, **dadurch gekennzeichnet, dass** die Umgebungsdaten (UD) über die V2X-Kommunikation (9) zwischen den Fahrzeugen (2i) des Fahrzeugverbundes (1) und/oder zwischen den Fahrzeugen (2i) und einer Infrastruktureinrichtung (50) abseits des Fahrzeugverbbundes (1), die ein externes Umgebungserfassungssystem (60) aufweist, übertragen werden.

12. Verfahren nach Anspruch 10 oder 11, **dadurch gekennzeichnet, dass** die Umgebungsdaten (UD) unterschiedlicher Umgebungserfassungssysteme (6i, 60) fusioniert werden.

13. Verfahren nach einem der Ansprüche 8 bis 12, **dadurch gekennzeichnet, dass** lediglich dann geprüft wird, ob der durch den Eintritts-Abstand (dE) ausgebildete Zwischenraum (R) zwischen den jeweiligen Teil-Fahrzeugverbünden (1.k) ein Einscheren eines als einscherbereit erkannten Fahrzeuges (40, 41) der Fahrzeuglänge (L) erlaubt, wenn sich der Fahrzeugverbund (1) einer Auffahrt (31) und/oder einer Ausfahrt (32) nähert, so dass ein Erhöhen des Soll-Abstandes (dSollj) ausgehend vom Eintrittsabstand (dE) lediglich dann erfolgen kann, wenn sich der Fahrzeugverbund (1) einer Auffahrt (31) und/oder einer Ausfahrt (32) nähert.

14. Verfahren nach einem der Ansprüche 8 bis 13, **dadurch gekennzeichnet, dass** nach einem Erfassen, dass das einscherbereite Fahrzeug (40, 41) sich aus dem Zwischenraum (R) wieder entfernt hat, dem Führungsfahrzeug (X.k, k>1) des jeweiligen Folge-Teil-Fahrzeugverbundes (1.k, k>1) als Soll-Abstand (dSollj) der Eintrittsabstand (dE) vorgegeben wird.

15. Verfahren nach einem der Ansprüche 8 bis 13, **dadurch gekennzeichnet, dass** der Soll-Abstand (dSollj), der dem Führungsfahrzeug (X.k, k>1) des jeweiligen Folge-Teil-Fahrzeugverbundes (1.k, k>1) vorgegeben wird und der mindestens dem Eintrittsabstand (dE) entspricht, zusätzlich in Abhängigkeit davon festgelegt wird, ob zwei oder mehrere einscherbereite Fahrzeuge (40, 41) erkannt werden.

16. Verfahren nach einem der vorhergehenden Ansprüche, **dadurch gekennzeichnet, dass** das einscherbereite Fahrzeug (40, 41) ein auffahrendes Fahrzeug (40) ist, das beabsichtigt, von einer Auffahrt (31) auf die Fahrbahn (3) des Fahrzeugverbundes (1) zu wechseln, oder ein abfahrbereites Fahrzeug (41) ist, das beabsichtigt, von einer benachbarten Fahrbahn (3a) über die Fahrbahn (3) des Fahrzeugverbundes (1) auf eine Ausfahrt (32) zu wechseln.

17. Auswerteeinheit (70) zum Durchführen des Verfahrens nach einem der vorhergehenden Ansprüche, wobei die Auswerteeinheit (70) ausgebildet ist, die Soll-Abstände (dSollj) zwischen Fahrzeugen (2i) eines Fahrzeugverbundes (1) derartig festzulegen, dass der Fahrzeugverbund (1) dauerhaft in eine festgelegte Anzahl (M) von mindestens zwei Teil-Fahrzeugverbünden (1.k, k=1, 2,...) unterteilt ist, so dass einem Führungs-Teil-Fahrzeugverbund (1.1) mindestens ein Folge-Teil-Fahrzeugverbund (1.k, k>1) folgt, wobei die Auswerteeinheit (70) dazu ausgelegt ist
- zumindest jedem Folge-Teil-Fahrzeugverbund (1.k, k>1) ein Führungsfahrzeug (X.k, k>1) zuzuordnen, wobei das Führungsfahrzeug (X.k) des jeweiligen Folge-Teil-Fahrzeugverbundes (1.k, k>1) den jeweiligen Folge-Teil-Fahrzeugverbund (1.k, k>1) als erstes Fahrzeug (2i) anführt; und
- dem Führungsfahrzeug (X.k, k>1) des jeweiligen Folge-Teil-Fahrzeugverbundes (1.k, k>1) ein Soll-Abstand (dSollj) vorzugeben, der mindestens einem vorab festgelegten Eintrittsabstand (dE) entspricht, der in jedem Fall zwischen den Teil-Fahrzeugverbünden einzuhalten ist,
wobei der Eintrittsabstand (dE) derartig festgelegt ist, dass sich nach Einstellen des Eintrittsabstandes (dE) als Soll-Abstand (dSollj) zu einem direkt vorausfahrenden Fahrzeug (2i) desselben Fahrzeugverbundes (1) ein Zwischenraum (R) zwischen den jeweiligen Teil-Fahrzeugverbünden (1.k) ausbildet, so dass ein einscherbereites Fahrzeug (40, 41) mit einer Fahrzeuglänge (L), die eine vorab festgelegte Maximallänge (LMax) nicht überschreitet, zwischen den mindestens zwei Teil-Fahrzeugverbünden (1.k) auf die Fahrbahn (3) des Fahrzeugverbundes (1) in den Zwischenraum (R) wechseln kann und der Soll-Abstand (dSollj), der dem Führungsfahrzeug (X.k, k>1) des jeweiligen Folge-Teil-Fahrzeugverbundes (1.k, k>1) vorgegeben wird, unter der Bedingung festgelegt wird, dass Fahrzeuge (2i) unterschiedlicher Teil-Fahrzeugverbünde (1.k) nach Einstellen dieses Soll-Abstandes (dSollj) weiterhin über die V2X-Kommunikation (9) drahtlos miteinander mittelbar oder unmittelbar kommunizieren können zum Abstimmen des gesamten Fahrzeugverbundes (1).

18. Fahrzeug (2i), insbesondere Leitfahrzeug (Z) eines Fahrzeugverbundes (1), mit einer Auswerteeinheit (70) nach Anspruch 17.

19. Fahrzeugverbund (1) aus mehreren Fahrzeugen (2i), wobei zumindest eines der Fahrzeuge (2i) als Leitfahrzeug (Z) eine Auswerteeinheit (70) nach Anspruch 17 aufweist und das Leitfahrzeug (Z) mit den Fahrzeugen (2i) des Fahrzeugverbundes (1) über eine V2X-Kommunikation (9) drahtlos kommunizieren kann, wobei die Fahrzeuge (2i) jeweils ein Abstandsregelsystem (5) aufweisen, wobei das Abstandsregelsystem (5) jeweils ausgebildet ist, den vom Leitfahrzeug (Z) über die Auswerteinheit (70) vorgegebenen und über die V2X-Kommunikation (9) übertragenen Soll-Abstand (dSollj) einzustellen zum dauerhaften Unterteilen des Fahrzeugverbundes (1) in mindestens zwei Teilfahrzeug-Verbünde (1.k) und der Soll-Abstand (dSollj), der dem Führungsfahrzeug (X.k, k>1) des jeweiligen Folge-Teil-Fahrzeugverbundes (1.k, k>1) vorgegeben wird, unter der Bedingung festgelegt wird, dass Fahrzeuge (2i) unterschiedlicher Teil-Fahrzeugverbünde (1.k) nach Einstellen dieses Soll-Abstandes (dSollj) weiterhin über die V2X-Kommunikation (9) drahtlos miteinander mittelbar oder unmittelbar kommunizieren können zum Abstimmen des gesamten Fahrzeugverbundes (1).

## Claims

1. Method for coordinating a vehicle group (1) composed of a number (N) of vehicles (2i, i=1 ,2,.., N), the vehicles (2i) of the vehicle group (1) moving (St1) on a roadway (3) at predetermined target distances (dSollj; j=1, 2, ...N-1) from one another and the vehicles (2i) communicating with one another wirelessly via V2X communication (9), the predetermined target distance (dSollj) from the corresponding vehicle (2i) being adjusted via a distance control system (5), the target distances (dSollj) being defined such that the vehicle group (1) is permanently divided (St1a) into a defined number (M) of at least two vehicle sub-groups (1.k, k=1, 2,...,M), so that a guide vehicle sub-group (1.1) is followed by at least one following vehicle sub-group (1.k, k>1), wherein for this purpose
- a separate guide vehicle (X.k, k>1) is assigned (St1b) to at least each following vehicle sub-group (1.k, k>1), the guide vehicle (X.k, k>1) of the corresponding following vehicle sub-group (1.k, k>1) leading the corresponding following vehicle sub-group (1.k, k>1) as a first vehicle (2i); and
- a target distance (dSollj) is specified to the guide vehicle (X.k, k>1) of the corresponding following vehicle sub-group (1.k, k>1), which target distance corresponds (St1d) at least to a predefined entry distance (dE) which must always be maintained between the vehicle sub-groups,
the entry distance (dE) being defined such that, after the entry distance (dE) has been adjusted as the target distance (dSollj) from a vehicle (2i), driving directly ahead, of the same vehicle group (1), a gap (R) forms between the corresponding vehicle sub-groups (1.k), so that a vehicle (40, 41) which is ready to cut in and has a vehicle length (L) which does not exceed a predefined maximum length (LMax) can switch into the gap (R) on the roadway (3) of the vehicle group (1) between the at least two vehicle sub-groups (1.k), the target distance (dSollj) that is specified to the guide vehicle (X.k, k>1) of the corresponding following vehicle sub-group (1.k, k>1) being defined under the condition whereby vehicles (2i) of different vehicle sub-groups (1.k) can also communicate wirelessly indirectly or directly with one another via the V2X communication (9) after this target distance (dSollj) has been adjusted, in order to coordinate the entire vehicle group (1).

2. Method according to claim 1, **characterized in that** the entry distance (dE) is defined on the basis of the maximum length (LMax) and a minimum distance (dmin) in front of and behind the vehicle (40, 41) which is ready to cut in, wherein the maximum length (LMax) is between 5 m and 10 m, preferably 6 m, and the minimum distance (dmin) is between 10 m and 25 m in each case in front of and behind the vehicle (40, 41) which is ready to cut in, so that the entry distance (dE) is set to between 25 m and 60 m, preferably to 35 meters.

3. Method according to either of the preceding claims, **characterized in that** a target distance (dSollj) from a vehicle (2i), driving directly ahead thereof, of the same vehicle sub-group (1.k) is specified to all other vehicles (2i) of the vehicle group (1) that are not guide vehicles (X.k, k,>1) of a following vehicle sub-group (1.k, k>1), which target distance corresponds (St1c) to a group following distance (dF), the group following distance (dF) being smaller than the entry distance (dE).

4. Method according to claim 3, **characterized in that** the group following distance (dF) is adjusted on the basis of driving dynamic properties of the vehicles (2i) of the vehicle group (1), the group following distance (dF) being less than 25 meters, in particular less than 15 meters.

5. Method according to claim 4, **characterized in that** the driving dynamic properties of the vehicles (2i) of the vehicle group (1) are transmitted via the V2X communication (9) in order to define the group following distance (dF) in a manner coordinated with one another.

6. Method according to any of the preceding claims, **characterized in that,** as part of the division of the vehicle group (1) into at least two vehicle sub-groups (1.k), by specifying and adjusting the entry distance (dE) as the target distance (dSollj) in the guide vehicle (X.k, k>1) of the corresponding following vehicle sub-group (1.k, k>1), no communication takes place via the V2X communication (9) with a vehicle (40, 41) which is ready to cut in.

7. Method according to any of the preceding claims, **characterized in that,** when defining the number (M) of vehicle sub-groups (1.k), it is taken into account that each vehicle sub-group (1.k) consists of a maximum number (NMax) of vehicles (2i), the maximum number (NMax) being between three and eight, particularly preferably five.

8. Method according to any of the preceding claims, **characterized in that** the target distance (dSollj), which is specified to the guide vehicle (X.k, k>1) of the corresponding following vehicle sub-group (1.k, k>1) and which corresponds at least to the entry distance (dE), is additionally defined on the basis of whether the gap (R), formed by the entry distance (dE), between the corresponding vehicle groups (1.k) allows a vehicle (40, 41) which is identified as ready to cut in and has the vehicle length (L) to cut in, the target distance (dSollj) being increased starting from the entry distance (dE) when it is defined that cutting in is not possible.

9. Method according to claim 8, **characterized in that,** in order to define the target distance (dSollj), it is checked whether the vehicle length (L) of the vehicle (40, 41) identified as ready to cut in exceeds the predefined maximum length (LMax), the target distance (dSollj) being increased by a distance amount (dB) starting from the entry distance (dE) when the maximum length (LMax) is exceeded.

10. Method according to claim 8 or claim 9, **characterized in that** the identification of whether a vehicle (40, 41) is ready to cut in and the determination of the vehicle length (L) of the vehicle (40, 41) identified as ready to cut in are carried out on the basis of surroundings data (UD), the surroundings data (UD) being output by at least one surroundings-detection system (6i, 60), the corresponding surroundings-detection system (6i, 60) monitoring the surroundings (U) around the vehicle group (1).

11. Method according to claim 10, **characterized in that** the surroundings data (UD) are transmitted via the V2X communication (9) between the vehicles (2i) of the vehicle group (1) and/or between the vehicles (2i) and an infrastructure device (50) remote from the vehicle group (1), which infrastructure device has an external surroundings-detection system (60).

12. Method according to claim 10 or claim 11, **characterized in that** the surroundings data (UD) of different surroundings-detection systems (6i, 60) are fused.

13. The method according to any of claims 8 to 12, **characterized in that** a check as to whether the gap (R), formed by the entry distance (dE), between the corresponding vehicle sub-groups (1.k) allows a vehicle (40, 41) which is identified as ready to cut in and has the vehicle length (L) to cut in is then only performed when the vehicle group (1) approaches an entry ramp (31) and/or an exit ramp (32), so that an increase in the target distance (dSollj) starting from the entry distance (dE) can only take place when the vehicle group (1) approaches an entry ramp (31) and/or an exit ramp (32).

14. Method according to any of claims 8 to 13, **characterized in that,** after detecting that the vehicle (40, 41) that is ready to cut in has exited the gap (R) again, the entry distance (dE) is specified to the guide vehicle (X.k, k>1) of the corresponding following vehicle sub-group (1.k, k>1) as the target distance (dSollj).

15. Method according to any of claims 8 to 13, **characterized in that** the target distance (dSollj) which is specified to the guide vehicle (X.k, k>1) of the corresponding following vehicle sub-group (1.k, k>1) and which corresponds at least to the entry distance (dE) is additionally defined on the basis of whether two or more vehicles (40, 41) that are ready to cut in are identified.

16. Method according to any of the preceding claims, **characterized in that** the vehicle (40, 41) that is ready to cut in is a joining vehicle (40) which intends to switch from an entry ramp (31) to the roadway (3) of the vehicle group (1), or is a vehicle (41) which is ready to leave and intends to switch from an adjacent roadway (3a) to an exit ramp (32) via the roadway (3) of the vehicle group (1).

17. Evaluation unit (70) for carrying out the method according to any of the preceding claims, the evaluation unit (70) being designed to define the target distances (dSollj) between vehicles (2i) of a vehicle group (1) such that the vehicle group (1) is permanently divided into a number (M) of at least two vehicle sub-groups (1.k, k=1, 2,...,M), so that a guide vehicle sub-group (1.1) is followed by at least one following vehicle sub-group (1.k, k>1), the evaluation unit (70) being designed to
- assign a guide vehicle (X.k, k>1) to at least each following vehicle sub-group (1.k, k>1), the guide vehicle (X.k) of the corresponding following vehicle sub-group (1.k, k>1) leading the corresponding following vehicle sub-group (1.k, k>1) as a first vehicle (2i); and
- specify a target distance (dSollj) to the guide vehicle (X.k, k>1) of the corresponding following vehicle sub-group (1.k, k>1), which target distance corresponds at least to a predefined entry distance (dE) which must always be maintained between the vehicle sub-groups,
the entry distance (dE) being defined such that, after the entry distance (dE) has been adjusted as the target distance (dSollj) from a vehicle (2i), driving directly ahead, of the same vehicle group (1), a gap (R) forms between the corresponding vehicle sub-groups (1.k), so that a vehicle (40, 41) which is ready to cut in and has a vehicle length (L) which does not exceed a predefined maximum length (LMax) can switch into the gap (R) on the roadway (3) of the vehicle group (1) between the at least two vehicle sub-groups (1.k), and the target distance (dSollj) that is specified to the guide vehicle (X.k, k>1) of the corresponding following vehicle sub-group (1.k, k>1) being defined under the condition whereby vehicles (2i) of different vehicle sub-groups (1.k) can also communicate wirelessly indirectly or directly with one another via the V2X communication (9) after this target distance (dSollj) has been adjusted, in order to coordinate the entire vehicle group (1).

18. Vehicle (2i), in particular a lead vehicle (Z) of a vehicle group (1), comprising an evaluation unit (70) according to claim 17.

19. Vehicle group (1) composed of a plurality of vehicles (2i), wherein at least one of the vehicles (2i) as a lead vehicle (Z) has an evaluation unit (70) according to claim 17 and the lead vehicle (Z) can communicate wirelessly with the vehicles (2i) of the vehicle group (1) via V2X communication (9), the vehicles (2i) each having a distance control system (5), the distance control system (5) being designed in each case to adjust the target distance (dSollj) specified by the lead vehicle (Z) via the evaluation unit (70) and transmitted via the V2X communication (9), in order to permanently divide the vehicle group (1) into at least two vehicle sub-groups (1.k), and the target distance (dSollj) that is specified to the guide vehicle (X.k, k>1) of the corresponding following vehicle sub-group (1.k, k>1) being defined under the condition whereby vehicles (2i) of different vehicle sub-groups (1.k) can also communicate wirelessly indirectly or directly with one another via the V2X communication (9) after this target distance (dSollj) has been adjusted, in order to coordinate the entire vehicle group (1).

## Revendications

1. Procédé permettant de coordonner un convoi de véhicules (1) constitué d'un nombre (N) de véhicules (2i, i=1 ,2,..,N), dans lequel les véhicules (2i) du convoi de véhicules (1) se déplacent (St1) les uns par rapport aux autres sur une chaussée (3) à des distances de consigne (dSollj ; j=1, 2,...N-1) prédéfinies et les véhicules (2i) communiquent entre eux sans fil par l'intermédiaire d'une communication V2X (9), dans lequel la distance de consigne (dSollj) prédéfinie par rapport au véhicule (2i) respectif est réglée par l'intermédiaire d'un système de régulation de distance (5), dans lequel les distances de consigne (dSollj) sont déterminées de telle sorte que le convoi de véhicules (1) est divisé (St1a) durablement en un nombre (M) déterminé d'au moins deux convois de véhicules partiels (1.k, k=1, 2,...,M), de sorte qu'au moins un convoi de véhicules partiel suiveur (1.k, k>1) suit un convoi de véhicules partiel de guidage (1.1), dans lequel, à cet effet,
- un véhicule de guidage (X.k, k>1) propre est associé (St1b) à au moins chaque convoi de véhicules partiel suiveur (1.k, k>1), dans lequel le véhicule de guidage (X.k, k>1) du convoi de véhicules partiel suiveur (1.k, k>1) respectif dirige le convoi de véhicules partiel suiveur (1.k, k>1) respectif en tant que premier véhicule (2i) ; et
- une distance de consigne (dSollj) est prédéfinie pour le véhicule de guidage (X.k, k>1) du convoi de véhicules partiel suiveur (1.k, k>1) respectif, laquelle correspond (St1d) au moins à une distance d'entrée (dE) déterminée au préalable, laquelle distance d'entrée doit être respectée dans tous les cas entre les convois de véhicules partiels,
dans lequel la distance d'entrée (dE) est déterminée de telle sorte que, après le réglage de la distance d'entrée (dE) comme distance de consigne (dSollj) par rapport à un véhicule (2i) du même convoi de véhicules (1) le précédant directement, un espace intermédiaire (R) se forme entre les convois de véhicules partiels (1.k) respectifs, de sorte qu'un véhicule (40, 41) prêt à s'insérer, comportant une longueur de véhicule (L) ne dépassant pas une longueur maximale (LMax) déterminée au préalable, peut passer dans l'espace intermédiaire (R) entre les au moins deux convois de véhicules partiels (1.k) sur la chaussée (3) du convoi de véhicules (1), dans lequel la distance de consigne (dSollj), laquelle est prédéfinie pour le véhicule de guidage (X.k, k>1) du convoi de véhicules partiel suiveur (1.k, k>1) respectif, est déterminée à la condition que les véhicules (2i) des différents convois de véhicules partiels (1.k) puissent en outre, après le réglage de ladite distance de consigne (dSollj), communiquer entre eux sans fil, directement ou indirectement, par l'intermédiaire de la communication V2X (9), pour la coordination de l'ensemble du convoi de véhicules (1).

2. Procédé selon la revendication 1, **caractérisé en ce que** la distance d'entrée (dE) est déterminée en fonction de la longueur maximale (LMax) ainsi que d'une distance minimale (dmin) avant et après le véhicule (40, 41) prêt à s'insérer, dans lequel la longueur maximale (LMax) est comprise entre 5 m et 10 m, de préférence est de 6 m, et la distance minimale (dmin) se situe entre 10 m et 25 m respectivement avant et après le véhicule (40, 41) prêt à s'insérer, de sorte que la distance d'entrée (dE) est déterminée comme étant entre 25 m et 60 m, de préférence de 35 mètres.

3. Procédé selon l'une des revendications précédentes, **caractérisé en ce que,** pour tous les autres véhicules (2i) du convoi de véhicules (1), lesquels ne sont pas des véhicules de guidage (X.k, k>1) d'un convoi de véhicules partiel suiveur (1.k, k>1), une distance de consigne (dSollj) est prédéfinie par rapport à un véhicule (2i) du même convoi de véhicules partiel (1.k) le précédant directement, laquelle distance de consigne correspond (St1c) à une distance de suivi de convoi (dF), dans lequel la distance de suivi de convoi (dF) est inférieure à la distance d'entrée (dE).

4. Procédé selon la revendication 3, **caractérisé en ce que** la distance de suivi de convoi (dF) est réglée en fonction de propriétés dynamiques de conduite des véhicules (2i) du convoi de véhicules (1), dans lequel la distance de suivi de convoi (dF) est inférieure à 25 mètres, en particulier inférieure à 15 mètres.

5. Procédé selon la revendication 4, **caractérisé en ce que** les propriétés dynamiques de conduite des véhicules (2i) du convoi de véhicules (1) sont transmises par l'intermédiaire de la communication V2X (9) pour la détermination coordonnée de la distance de suivi de convoi (dF) entre elles.

6. Procédé selon l'une des revendications précédentes, **caractérisé en ce que,** dans le cadre de la division du convoi de véhicules (1) en au moins deux convois de véhicules partiels (1.k), en prédéfinissant et en réglant la distance d'entrée (dE) comme distance de consigne (dSollj) dans le véhicule de guidage (X.k, k>1) du convoi de véhicules partiel suiveur (1.k, k>1) respectif, il n'y pas de communication par l'intermédiaire de la communication V2X (9) avec un véhicule (40, 41) prêt à s'insérer.

7. Procédé selon l'une des revendications précédentes, **caractérisé en ce que,** lors de la détermination du nombre (M) de convois de véhicules partiels (1.k), le fait que chaque convoi de véhicules partiel (1.k) se compose d'un nombre maximal (NMax) de véhicules (2i) est pris en compte, dans lequel le nombre maximal (NMax) se situe entre trois et huit, de manière particulièrement préférée est de cinq.

8. Procédé selon l'une des revendications précédentes, **caractérisé en ce que** la distance de consigne (dSollj), laquelle est prédéfinie pour le véhicule de guidage (X.k, k>1) du convoi de véhicules partiel suiveur (1.k, k>1) respectif et correspond au moins à la distance d'entrée (dE), est en outre déterminée en fonction du fait de savoir si l'espace intermédiaire (R) formé par la distance d'entrée (dE) entre les convois de véhicules (1.k) respectifs permet une insertion d'un véhicule (40, 41) reconnu comme étant prêt à s'insérer et de la longueur de véhicule (L), dans lequel, en cas d'une constatation du fait qu'une insertion n'est pas possible, la distance de consigne (dSollj) est augmentée en partant de la distance d'entrée (dE).

9. Procédé selon la revendication 8, **caractérisé en ce que,** pour la détermination de la distance de consigne (dSollj), on vérifie si la longueur de véhicule (L) du véhicule (40, 41) reconnu comme étant prêt à s'insérer dépasse la longueur maximale (LMax) prédéfinie, dans lequel la distance de consigne (dSollj) est augmentée d'une valeur de distance (dB) en cas de dépassement de la longueur maximale (LMax), en partant de la distance d'entrée (dE).

10. Procédé selon la revendication 8 ou 9, **caractérisé en ce que** la reconnaissance du fait de savoir si un véhicule (40, 41) est prêt à s'insérer et la spécification de la longueur de véhicule (L) du véhicule (40, 41) reconnu comme étant prêt à s'insérer sont effectuées en fonction de données de zone environnante (UD), dans lequel les données de zone environnante (UD) sont émises par au moins un système de détection de zone environnante (6i, 60), dans lequel le système de détection de zone environnante (6i, 60) respectif surveille une zone environnante (U) autour du convoi de véhicules (1).

11. Procédé selon la revendication 10, **caractérisé en ce que** les données de zone environnante (UD) sont transmises par l'intermédiaire de la communication V2X (9) entre les véhicules (2i) du convoi de véhicules (1) et/ou entre les véhicules (2i) et un dispositif d'infrastructure (50) à l'écart du convoi de véhicules (1), lequel dispositif d'infrastructure présente un système de détection de zone environnante (60) externe.

12. Procédé selon la revendication 10 ou 11, **caractérisé en ce que** les données de zone environnante (UD) de différents systèmes de détection de zone environnante (6i, 60) sont fusionnées.

13. Procédé selon l'une des revendications 8 à 12, **caractérisé en ce que** l'on vérifie uniquement si l'espace intermédiaire (R) formé par la distance d'entrée (dE) entre les convois de véhicules partiels (1.k) respectifs permet l'insertion d'un véhicule (40, 41) de la longueur de véhicule (L) et reconnu comme prêt à s'insérer lorsque le convoi de véhicules (1) s'approche d'une entrée (31) et/ou d'une sortie (32), de sorte qu'une augmentation de la distance de consigne (dSollj) en partant de la distance d'entrée (dE) peut uniquement être effectuée lorsque le convoi de véhicules (1) s'approche d'une entrée (31) et/ou d'une sortie (32).

14. Procédé selon l'une des revendications 8 à 13, **caractérisé en ce qu'**après une détection du fait que le véhicule (40, 41) prêt à s'insérer s'est à nouveau éloigné de l'espace intermédiaire (R), la distance d'entrée (dE) est prédéfinie comme distance de consigne (dSollj) pour le véhicule de guidage (X.k, k>1) du convoi de véhicules partiel suiveur (1.k, k>1) respectif.

15. Procédé selon l'une des revendications 8 à 13, **caractérisé en ce que** la distance de consigne (dSollj), laquelle est prédéfinie pour le véhicule de guidage (X.k, k>1) du convoi de véhicules partiel suiveur (1.k, k>1) respectif et correspond au moins à la distance d'entrée (dE), est en outre déterminée en fonction du fait de savoir si deux véhicules (40, 41) prêts à s'insérer ou plus sont reconnus.

16. Procédé selon l'une des revendications précédentes, **caractérisé en ce que** le véhicule (40, 41) prêt à s'insérer est un véhicule (40) entrant qui a l'intention de passer d'une entrée (31) à la chaussée (3) du convoi de véhicules (1), ou est un véhicule (41) prêt à sortir qui a l'intention de passer d'une chaussée voisine (3a) à une sortie (32) par l'intermédiaire de la chaussée (3) du convoi de véhicules (1).

17. Unité d'évaluation (70) pour la mise en oeuvre du procédé selon l'une des revendications précédentes, dans laquelle l'unité d'évaluation (70) est configurée pour déterminer les distances de consigne (dSollj) entre des véhicules (2i) d'un convoi de véhicules (1) de telle sorte que le convoi de véhicules (1) est divisé durablement en un nombre (M) déterminé d'au moins deux convois de véhicules partiels (1.k, k=1, 2,...), de sorte qu'au moins un convoi de véhicules partiel suiveur (1.k, k>1) suit un convoi de véhicules partiel de guidage (1.1), dans laquelle l'unité d'évaluation (70) est configurée pour
- associer un véhicule de guidage (X.k, k>1) à au moins chaque convoi de véhicules partiel suiveur (1.k, k>1), dans laquelle le véhicule de guidage (X.k) du convoi de véhicules partiel suiveur (1.k, k>1) respectif dirige le convoi de véhicules partiel suiveur (1.k, k>1) respectif en tant que premier véhicule (2i) ; et
- prédéfinir une distance de consigne (dSollj) pour le véhicule de guidage (X.k, k>1) du convoi de véhicules partiel suiveur (1.k, k>1) respectif, laquelle correspond au moins à une distance d'entrée (dE) déterminée au préalable, laquelle distance d'entrée doit être respectée dans tous les cas entre les convois de véhicules partiels,
dans laquelle la distance d'entrée (dE) est déterminée de telle sorte que, après un réglage de la distance d'entrée (dE) comme distance de consigne (dSollj) par rapport à un véhicule (2i) du même convoi de véhicules (1) le précédant directement, un espace intermédiaire (R) se forme entre les convois de véhicules partiels (1.k) respectifs, de sorte qu'un véhicule (40, 41) prêt à s'insérer, comportant une longueur de véhicule (L) ne dépassant pas une longueur maximale (LMax) déterminée au préalable, peut passer dans l'espace intermédiaire (R) entre les au moins deux convois de véhicules partiels (1.k) sur la chaussée (3) du convoi de véhicules (1), et la distance de consigne (dSollj), laquelle est prédéfinie pour le véhicule de guidage (X.k, k>1) du convoi de véhicules partiel suiveur (1.k, k>1) respectif, est déterminée à la condition que les véhicules (2i) des différents convois de véhicules partiels (1.k) puissent en outre, après le réglage de ladite distance de consigne (dSollj), communiquer entre eux sans fil, directement ou indirectement, par l'intermédiaire de la communication V2X (9), pour la coordination de l'ensemble du convoi de véhicules (1).

18. Véhicule (2i), en particulier véhicule de tête (Z) d'un convoi de véhicules (1), comportant une unité d'évaluation (70) selon la revendication 17.

19. Convoi de véhicules (1) composé de plusieurs véhicules (2i), dans lequel au moins l'un des véhicules (2i) présente, en tant que véhicule de tête (Z), une unité d'évaluation (70) selon la revendication 17 et le véhicule de tête (Z) peut communiquer sans fil avec les véhicules (2i) du convoi de véhicules (1) par l'intermédiaire d'une communication V2X (9), dans lequel les véhicules (2i) présentent respectivement un système de régulation de distance (5), dans lequel le système de régulation de distance (5) est respectivement configuré pour régler la distance de consigne (dSollj) prédéfinie par le véhicule de tête (Z) par l'intermédiaire de l'unité d'évaluation (70) et transmise par l'intermédiaire de la communication V2X (9) afin de diviser durablement le convoi de véhicules (1) en au moins deux convois de véhicules partiels (1.k) et la distance de consigne (dSollj), laquelle est prédéfinie pour le véhicule de guidage (X.k, k>1) du convoi de véhicules partiel suiveur (1.k, k>1) respectif, est déterminée à la condition que les véhicules (2i) des différents convois de véhicules partiels (1.k) puissent en outre, après le réglage de ladite distance de consigne (dSollj), communiquer entre eux sans fil, directement ou indirectement, par l'intermédiaire de la communication V2X (9), pour la coordination de l'ensemble du convoi de véhicules (1).
